(19)

Europäisches Patentamt
European Patent Office
Office européen des brevets

(11) **EP 1 780 672 A1**

(12) **EUROPEAN PATENT APPLICATION**

(43) Date of publication:
**02.05.2007 Bulletin 2007/18**

(51) Int Cl.:
**G06T 7/00** *(2006.01)*

(21) Application number: **05425750.6**

(22) Date of filing: **25.10.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Bracco Imaging, S.P.A.**
**20134 Milano (IT)**

(72) Inventors:
• **Mattiuzi, Marco**
**50015 Grassina Bagno a Ripoli (FI) (IT)**

• **Gori, Ilaria**
**16145 Genova (IT)**
• **Vomveg, Toni. W.**
**56566 Neuwied (DE)**

(74) Representative: **Karaghiosoff, Giorgio Alessandro**
**Via Pecorile 25c**
**17015 Celle Ligure (Savona) (IT)**

(54) **Method of registering images, algorithm for carrying out the method of registering images, a program for registering images using the said algorithm and a method of treating biomedical images to reduce imaging artefacts caused by object movement**

(57) The invention provides for a method for registering biomedical images including an automatic trackable landmark selection step consisting in defining a pixel or voxel neighbourhood around each pixel or voxel of the first image or first set of cross-sectional images; for each target pixel or voxel determining one or more characteristic parameters which are calculated as a function of the parameters describing the appearance of the said target pixel or voxel and of each or a part of the pixels or voxels of the window and as a function of one or more characteristic parameters of either the numerical matrix or of a transformation of the said numerical matrix representing the pixels or voxels of the said window. The pixels or voxels coinciding with validly trackable landmarks are determined as a function of the said characteristic parameters of the target pixels or voxels.

Fig. 20

## Description

Method of registering images, algorithm for carrying out the method of registering images, a program for registering images using the said algorithm and a method of treating biomedical images to reduce imaging artefacts caused by object movement.

The invention relates to a method for registering images comprising the steps of:

a) Providing at least a first and a second digital or digitalized image or set of cross-sectional images of the same object, the said images being formed by a two or three dimensional array of pixels or voxels;

b) Defining within the first image or set of images a certain number of landmarks, so called features by selecting a certain number of pixels or voxels which are set as landmarks or features and generating a list of said features to be tracked;

c) Tracking the position of each pixel or voxel selected as a feature from the first to the second image or set of images by determining the optical flow vector from the first to the second image or set of images for each pixel or voxel selected as a feature;

d) Registering the first and the second image or set of images by applying the inverse optical flow to the pixels or voxels of the second image or set of images.

Such kind of registration method of the images being part of a time sequence is known for example from document US 6,553,152.

Document US 6,553,152 provides an image registration method for two images done by visual landmark identification and marking of corresponding pixels on both images by a human operator.

This way leaves the selection of landmarks completely to the skill of the operator and is practically very difficult to be carried out when no significantly or univocally recognizable structures are present in the images. Considering diagnostic images such as Magnetic Resonance Imaging (MRI) or Ultrasound or radiographic images the visual identification of a landmark by means of structural features of the images is extremely difficult and can cause big errors.

A variety of different algorithms tries to identify contours as disclosed in Fischer, B.; Modersitzki, J. Curvature Based Registration with Applications to MRMammography; Springer-Verlag Berlin Heidelberg: ICCS 2002, LNCS 2331, 2002; pp 202- 206 or landmarks within radiological images of an organ/region that has been measured twice or more times or has even been investigated with different modalities as for example has been disclosed in Shi J, Tomasi C. Good Features to Track. 1994 IEEE Conference on Computer Vision and Pattern Recognition (CVPR'94) 1994; 593-600 and in Tommasini T, Fusiello A, Trucco E, Roberto V. Making Good Features Track Better Proc. IEEE Int. Conf. on Computer Vision and Pattern Recognition (CVPR '98) 1998; 178- 183 and in Ruiter, N. V.; Muller, T. O.; Stotzka, R.; Kaiser, W. A. Elastic registration of x-ray mammograms and three-dimensional magnetic resonance imaging data. J Digit Imaging 2001, 14, 52-55.

Registering two plain images of the same object taken at different times to calculate object movement over the time is called two dimensional registration. An algorithm doing the same but working on three dimensional sets of images, e.g. sets of cross-sectional images of MRI or Computed Tomography (CT) scanners is called three dimensional. Movement of landmarks or objects may occur in any direction within these image sets.

Depending on the number of different modalities of imaging to be compared algorithms are divided into mono- or single-modal registration and multimodal registration algorithms.

Comparing two MRI series is a single-modal registration.

Normally single-modal registration algorithms try to identify definite landmarks or complex shapes within both images, mostly working in two dimensions. In a second step the position of corresponding landmarks in both images is compared and their movement vector is calculated. This information is used to shift back all pixels of the second image into a new position to eliminate movement artefacts.

"Rigid registration" shifts a two or three dimensional image/volume as a single unit into a certain direction. "Non-rigid registration" just moves single or multiple pixels/voxels of certain areas/volumes into different directions.

Regarding for example breast tissue which is very flexible, non-rigid registration is needed to eliminate movement artefacts.

Because of its special consistency without any forming structures like bones, parts of the breast directly neighboured could move into different directions. Therefore it is obvious that any registration algorithm or any other existing approach has to identify and spread landmarks all over the breast tissue.

One group of algorithms define a finite number of landmarks that have to be found. These will be sorted by their valence. Regarding breast MR images these approaches often find a high number of landmarks at the outer boundaries of the breast and at chest structures because of high contrast between fat/air in MRI (Huwer, S.; Rahmel, J.; Wangenheim, A. v. Data-Driven Registration for Lacal Deformations. Pattern Recognition Letters 1996, 17, 951-957).

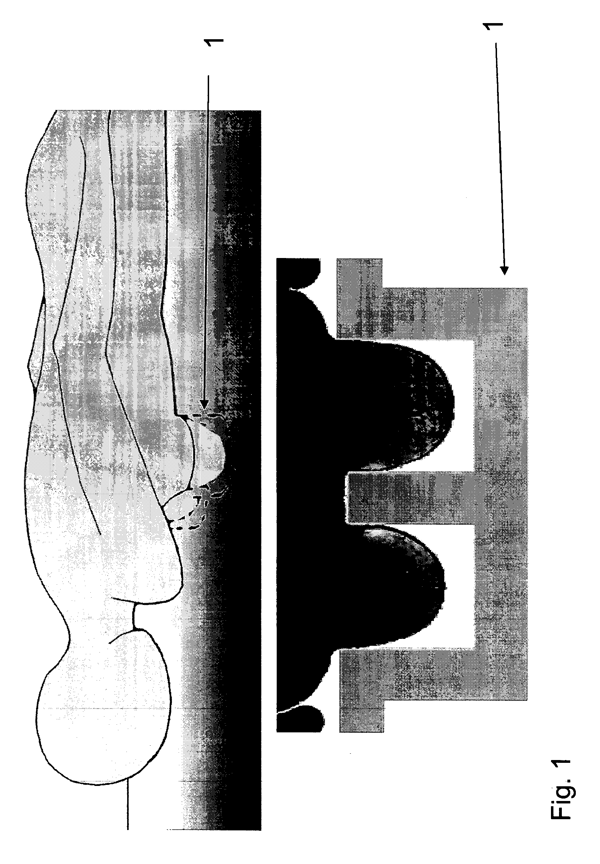

Using a compression panel or at least having both breasts fixed by lying on them in prone position normally leads to a good fixation of all parts of the skin having direct contact to the compression device (figure 1). In contrast the inner area of both breasts keeps on moving slightly by heartbeat and breathing. Because of the much lower contrast between fat and parenchyma in comparison to the outer skin/air boundary the number of valid landmarks within the centre of the breast remains low in these algorithms.

A general problem in landmark selection resides in the fact that selecting too few landmarks may result in an insufficient or inaccurate registration. However selecting additional landmarks does not necessarily guarantee accurate registration, because a human observer or any program could be forced to include landmarks of lower certainty of being reallocated e.g. caused by lower contrast of different tissue types in the centre of the breast. Rising the number of landmarks will always significantly increase the computational complexity of registration.

A feature selection and feature tracking algorithm which is particularly suited for so called non rigid registration is the so called Lucas & Kanade algorithm and its particular pyramidal implementation which are disclosed in detail in Lucas BD, Kanade T. An Iterative Image Registration Technique with an Application to Stereo Vision, IJCAI81; 674-679 1981 and in Bouguet J-Y. *Pyramidal Implementation* of *the Lucas Kanade Feature Tracker,* TechReport as Part of Open Computer Vision Library Documentation, Intel Corporation enclosed hereinafter as appendix 1. Lucas & Kanade technique and its pyramidal feature tracking implementation is particularly suited for automatically identifying reliable landmarks in the images and for tracking them between two images taken at different times. The displacements or shifts of the features selected are determined as shifts or so called optical flow vectors. This technique is widely applied for example for computer vision in robotics and is part of the general knowledge of the skilled person in digital image processing and computer vision being taught in several basic courses.

However considering the practical use of the Lucas and Kanade technique applied to digital or digitalized diagnostic images and more particularly to the breasts the said technique identifies too many features also outside the region of interest and is subject to noise for example within the air surrounding the breasts.

The following example gives a more detailed view of the problems cited above.

Contrast-enhanced (CE) Magnetic-Resonance-Mammography (MRM) is a useful and important investigation with exquisite sensitivity for invasive tumours. It shows a high negative predictive value independent of the density of breast parenchyma. Recent multi-centre studies indicate that sensitivity and specificity differ according to the techniques of image analysis. Using 1.5T scanners sensitivities of 96, 93 or 86% and specificities of 30, 50 or 70% respectively have been calculated. Therefore, the main disadvantage of MRM remains to be the high percentage of false positive diagnoses.

Normally MR imaging is performed on a 1.0 or 1.5 Tesla imager with the manufacturer's double breast coil used (often a single breast coil device in the USA) while the patient is in prone position. The protocol does at least include a dynamic contrast enhanced T1-weighted sequence in any orientation with an acquisition time of something between 30 and 180s. At least one measurement is acquired before and several measurements after bolus injection of gadopentetate dimeglumine or any other paramagnetic MR contrast agents.

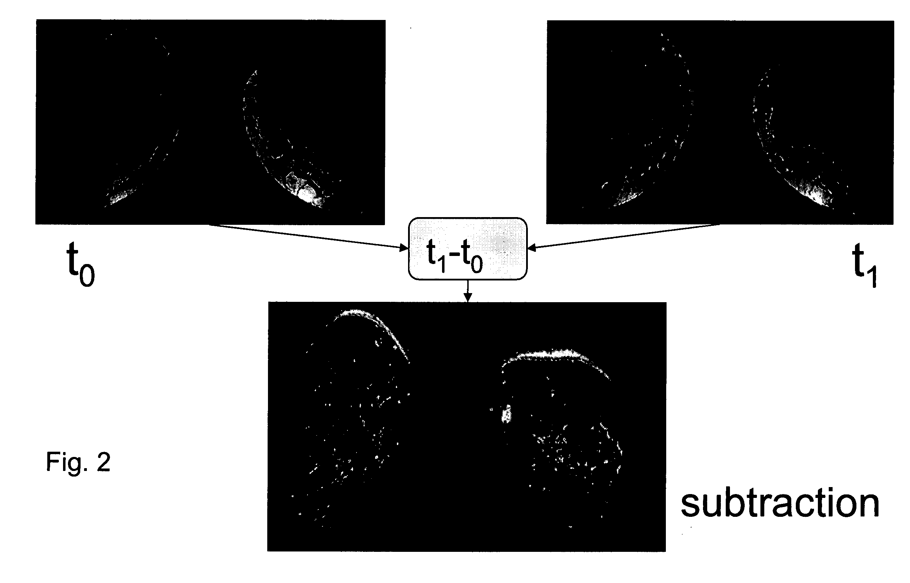

To calculate the real contrast agent uptake of an area of breast tissue the signal intensity of each voxel before contrast agent application has to be subtracted from the signal intensity after contrast agent application. Because of minimal movements of both breasts caused by respiration and heartbeat as well as partial volume effects caused by the slice thickness of MR-images, voxels of the same image position taken at different times do not exactly show the same volume of breast tissue. Therefore the subtraction image is not absolutely black (except for the tumour). The effect of small movements could be demonstrated best at the outer boundaries of the breast. Because of the high signal intensity of fatty tissue and a signal intensity of about zero of the surrounding air a very small movement places fat at the former image position of air. Subtracting zero signal intensity of air from high signal intensity of fat simulates a high signal elevation by CM application. As a result subtraction images show a thick white line representing a strong contrast agent uptake around at least parts of the imaged breast (figure 2 - The white outer border of the breast is marked by signs).

Considering a three dimensional or volumetric image acquisition defined by a Cartesian system, in addition to any movement in x and y direction one will always find some movement in z-direction (towards the chest) This is caused by patient relaxation during the course of the investigation.

To reduce artefacts, breasts are normally fixed inside the breast coil by some kind of compression method (depending on the manufacturer). But despite this fact minimal movement always take place. Thus despite fixing of the breasts the images show always slight movement artefacts in x, y and z direction, which movement artefacts are visualized in the subtraction image as bright pixel. Without movement artefacts the subtraction image should be absolutely black except than for the area occupied by the tumoral tissue.

A certain number of landmarks is detected outside the breasts within the noisy signal of surrounding air. Besides the fact that each feature considered has to be tracked and causes an unnecessary computational burden, noise is a random effect and all features or landmarks found in the noise will not have a corresponding landmark in the second or subsequent images. But in fact an algorithm searching landmarks in the second or subsequent image or set of images corresponding to the landmarks found within the noise before, will somehow reallocate a certain amount of landmarks in the second image or set of images. This can lead to incorrect registration of the images and influence the result.

According to a currently known method "feature selection" can be carried out as follows:

B1) defining a pixel or voxel neighbourhood around each pixel or voxel of the first image or first set of cross-sectional images, the said pixel or voxel neighbourhood comprising a limited number of pixels or voxels; a two dimensional neighbourhood is chosen in case of a single image, a three dimensional neighbourhood is chosen in case of a set of cross-sectional images;

B2) for each pixel or voxel determining a mean signal intensity value of all pixels or voxels of the said neighbourhood of pixel or voxels;

B3) defining a mean signal intensity value threshold;

B4) comparing the mean signal intensity value determined for each pixel or voxel neighbourhood at step B2 and comparing the said mean signal intensity value with the mean signal intensity value threshold;

B5) in case of the mean signal intensity value of the said neighbourhood higher than the threshold at step B4 the pixels or voxels is defined as a feature to be tracked and is added to a list of features to be tracked.

The mean signal intensity threshold value is adjustable and can be varied. Empiric or experimental criteria can be applied for determining such threshold value for example by carrying out the method on a set of test or sample images and comparing the results obtained for different threshold values.

Automatic feature selection is currently carried out for example by applying the so called Lukas and Kanade algorithm either to two dimensional images or to three dimensional images which is a generalisation of the two dimensional case. The automatic feature selection method according to the well known Lucas & Kanade method is described with greater detail in Lucas BD, Kanade T. An Iterative Image Registration Technique with an Application to Stereo Vision, IJCAI81; 674-679 1981.

Automatic feature selection working in three dimensions and therefore in a set of cross-sectional images representing a three dimensional volume of data is a substantial enlargement of Lucas and Kanade's two dimensional feature detection algorithm and is explained in greater detail in the following description.

It is to be stressed out that in the present description and claims the term "feature" is equivalent to the term "validly trackable landmark".

With the help of the above described methods for automatic selecting landmarks or features to be tracked registering of images of an object can be carried out. Thanks to registration it is possible to compensate the motion differences, also called motion artefacts. However the registered image sequence has not a satisfactory visual appearance. After processing the images with the above method the images appears to be less sharp or show other effects.

Furthermore although the method for the automatic selection of the valid landmarks or features is an helpful tool which allows to select in an image the valid landmarks to be tracked according to objective criteria avoiding that the choice is carried out "manually", i.e. visually basing on the skills of an human operator, the identification of the valid landmarks is left only to one particular criteria which is a function of the eigenvalue of the gradient matrix determined by considering each pixel of the image as a target pixel and defining a windows around each target pixel which comprises a certain number of pixels surrounding the target pixel.

This method steps are a sort of edge detection and among the target pixels which has been identified as having the features of an edge only some are selected as being validly trackable landmarks for the registration process.

The object of the present invention consist in providing a method for registering images, particularly biomedical diagnostic images organized two or in three dimensions, that overcomes effectively the drawbacks of the known registration methods by being able to track movement in two or three dimensions, by reducing artefacts due to noise particularly outside the region of interest in digital or digitalized images and by spreading landmarks all over the breasts independent of high or low differences in signal intensity of neighboured tissue types.

Particularly the present invention has the aim of improving the steps of selecting valid landmarks to be tracked in the images.

According to the present invention the method for registering images comprises the following steps:

a) providing a first digital or digitalized image or set of cross-sectional images taken by MRI, Ultrasound or radiographic scanning of a tissue or tissue zone or of an anatomical district; the said images being formed by a two or three dimensional array of pixels or voxels; providing at least a second digital or digitalized image or set of cross-sectional images of the same anatomical district taken by MRI, Ultrasound or radiographic scanning of the same tissue or tissue zone or of the same anatomical district at a second time optional in presence of a contrast media in the said tissue or tissue zone or in the said anatomical district;

b) Defining within the first image or set of images a certain number of landmarks, so called features, by selecting a certain number of pixels or voxels which are set as landmarks or features and generating a list of said features to be tracked;

c) Tracking the position of each pixel or voxel selected as a feature from the first to the second image or set of images by determining the optical flow vector from the first to the second image or set of images for each pixel or voxel selected as a feature;

d) Registering the first and the second image or set of images by applying the inverse optical flow to the pixels or voxels of the second image or set of images.

And in which

an automatic trackable landmark selection step is carried out consisting in:

B1) defining a pixel or voxel neighbourhood around each pixel or voxel of the first image or first set of cross-sectional images, the said pixel or voxel neighbourhood comprising a limited number of pixels or voxels;

B2) for each target pixel or voxel determining one or more characteristic parameters which are calculated as a function of the numeric appearance parameters describing the appearance of the said target pixel or voxel and of each or a part of the pixels or voxels of the said pixel or voxel window and as a function of one or more characteristic parameters of either the numerical matrix or of a transformation of the said numerical matrix representing the pixels or voxels of the said window;

B3) determining the pixels or voxels consisting in validly trackable landmark or feature as a function of the said characteristic parameters of the target pixels or voxels.

According to a first embodiment of the present invention the function for determining if the target pixels or voxels are valid landmarks or features to be tracked consist in the comparison of the values of each one or of a combination of the said characteristic parameters of the target pixel or voxel with a threshold value.

Threshold values are determined by means of experiments, by carrying out the method on a set of test or sample images and comparing the results obtained for different threshold values.

An alternative method for determining if the target pixels or voxels are valid landmarks or features to be tracked consist in organising the characteristic parameters of the target pixel or voxel in a vector form which is the input vector of a classification algorithm.

In order to process the vector comprising as components a certain number of characteristic parameters of the target pixels or voxels, the classification algorithm need to be specifically trained for carrying out the said task.

Thus the method of the present invention according to the above mentioned alternative comprises the steps of:

providing a certain number of images of known cases in which a certain number of valid landmarks has been identified as validly trackable landmarks or features;

Determining the set of characteristic parameters for the pixels or voxels corresponding to the said landmarks identified validly trackable in the certain number of images by applying the automatic trackable landmark selection step consisting in the steps B1) and B2) disclosed above;

Generating a vector univoquely associated to each landmark identified as validly trackable and comprising as components the said characteristic parameters of the pixels or voxels coinciding with the validly trackable landmarks;

Describing the quality of validly trackable landmark by means of a predetermined numerical value of a variable and associating the said numerical value to the vector coding each pixel or voxel coinciding with a validly trackable landmark;

Each vector coding each pixel or voxel coinciding with a validly trackable landmark forming a record of a training database for a classification algorithm;

Training a classification algorithm by means of the said database;

Determining the quality of validly trackable landmark of a target pixel or voxel by furnishing to the input of the trained classification algorithm the vector comprising the characteristic parameters of the said target pixel or voxel.

According to an improvement the training database comprises also the characteristic parameters organized in vector form of pixels or voxels of the images of known cases coinciding with landmarks of which it is known not be validly trackable ones and describing the quality of non validly trackable landmark by means of a predetermined numerical value of a variable which is different from the value of the said variable describing the quality of validly trackable landmarks while the said numerical value describing the quality of non validly trackable landmarks is added to the vector coding each pixel or voxel coinciding with one of the said known non validly trackable landmarks.

This kind of automatic method for determining validly trackable landmarks by using classification algorithms has the further advantage to furnish also statistical measures indicating the reliability of the classification such as fitness or other similar statistical indicators.

As classification algorithms any kind of these algorithms can be used. Special cases of classification algorithms can be the so called clustering algorithms or artificial neural networks.

Relating to the characteristic numeric parameters which are calculated as a function of the numeric appearance parameters describing the appearance of the said target pixel or voxel and of each or a part of the pixels or voxels of the said pixel or voxel window and as a function of one or more characteristic parameters of either the numerical matrix or of a transformation of the said numerical matrix representing the pixels or voxels of the said window many different functions can be used in many different combinations.

A first function for determining a characteristic parameter of the target pixel or voxel corresponding to a feature or to a validly trackable landmark consist in the mean intensity value of all pixels or voxels of the said neighbourhood of pixel or voxels;

Further characteristic parameters of a target pixel or voxel consist in characteristic parameters of the numerical matrix representing the pixels or voxels of the said window defined at step B1), i.e. a certain number of pixels or voxels in the neighbourhood of the target pixels or voxels, the said characteristic parameters are the singular values of the numerical matrix comprising the image data of the pixels or voxels of the said window.

Alternatively or in combination with the above mentioned characteristic parameters, further characteristic parameters of a target pixel or voxel consist in the eigenvalues of the gradient matrix of the said numerical matrix representing the pixels or voxels of the said window

Further characteristic parameters of the target pixels or voxels consist in the eigenvalues of the Hessian matrix of the said numerical matrix representing the pixels or voxels of the said window.

A further choice for the characteristic parameters of the target pixels or voxels which can be provided alternatively or in combination of the above disclosed, consist in one or more of the coefficients of the wavelet transform of the numerical matrix of data corresponding to the pixels or voxels of the said window.

In this case several wavelet basis functions can be chosen to be used alternatively or in combination.

A more detailed description of the wavelet transform is given in appendix 1. This appendix consist in the publication available form the internet and entitled "Wavelet for Kids, A tutorial introduction" by Brani Vidakovic and Peter Mueller of Duke University. In this document the theory of wavelets is summarized and discussed and some applications to image processing are disclosed. As it appears from the chapter disclosing wavelets in image processing carrying out wavelet decomposition allow to obtain parameters. For each level of the decomposition a wavelet transform generates one matrix representing the mean and three matrices representing the so called details. From one or more of the above matrices it is possible to extract some parameters by for instance but not only taking the average of the elements of the matrix, or a second example by taking the singular values of the matrix. All of these parameters or some of these parameters can be used as characteristic parameters of the target pixels or voxels or to form the components of a vector representing each target pixel or voxel in terms of the relationship with the surrounding pixels or voxels comprised in a selected window.

A further choice for the characteristic parameters of the target pixels or voxels which can be provided alternatively or in combination of the above disclosed, consist in one or more of the coefficients of the autocorrelation transform of the said numerical matrix representing the pixels or voxels of the said window.

Autocorrelation in image processing is typically used as a tool for characterizing image texture and consists of a mathematical evaluation of two images. The two images can be taken either at different time instants or can be generated by shifting in space the first images and by taking the result as the second image. The autocorrelation determines the relationship between these two images. This mathematical evaluation offers the possibility of a reduction in the number of parameters to be considered in coding the target pixel or voxel.

Further characteristic parameters of the target pixels or voxels may consist in the co-occurrence matrix (or her singular values) of the said numerical matrix representing the pixels or voxels of the said window.

The co-occurrence matrix is a two-dimensional histogram of grey levels for a pair of pixels which are separated by a fixed spatial relationship. This matrix approximates the joint probability distribution of a pair of pixels. It is typically used to compute texture measures, like contrast and entropy.

According to the above specific examples of characteristic parameters of the target pixels or voxels, each target pixel or voxel is described by a combination or a subcombination of two or more of the eigenvalues or singular values of the matrix of the numerical values representing the pixels or voxels of the windows and/or of the eigenvalues of the gradient matrix or of the Hessian matrix of the said numerical matrix representing the pixels or voxels of the said window and/or of one or more of the coefficients of the wavelet transform and/or one or more of the coefficients of the autocorrelation transform and/or one or more of the entries or singular values of the co-occurrence matrix and/or of the mean intensity value of the pixels or voxels of the said windows and of the target pixel or voxel.

As already disclosed the said characteristic parameters can be used to determine if a target pixel or voxel can be considered as being a validly trackable landmark in the image or not by defining a threshold for each one of the said characteristic parameters or for a combination of the said parameters.

A further criteria may consist in organizing the said characteristic parameters in vector form in which each parameter is a component of the said vector and by determining the modulus of the said vector and comparing this value with a threshold value for the said modulus.

Alternatively the said vector can be processed by a classification algorithm as already disclosed above.

The relationship between the numerical values describing each target pixel or voxel and the pixels or voxels of the selected neighborhood defined by the chosen pixel or voxel windows is so summarized by the said singular values and/or eigenvalues of the said different transformations of the original numerical matrix consisting in the values representing simply the appearance of each pixel or voxel and/or by one or more of the coefficients of the wavelet transform and/or one or more of the coefficients of the autocorrelation transform and/or one or more of the entries or singular values of the co-occurrence matrix and in each vector this relationship is defined by different numerical values which are particularly suited for highlighting or being sensitive to certain kind of relationship between pixels or voxels of the image within the selected window.

So considering a part or all of these characteristic parameters for determining the quality of validly trackable landmark for a pixel or voxel helps in considering better and more completely the relation ships of this pixel or voxel with the rest of the image.

As already mentioned the above method can be used for registering two diagnostic images or three dimensional image volumes taken with the same or with different kinds of scanners in Magnetic Resonance Imaging (MRI) or Computed X-ray Tomography (CT)

The above disclosed registration method is also provided in combination with a method for contrast media enhanced diagnostic imaging such as MRI or Ultrasound images and particularly in contrast enhanced Magnetic Resonance Mammography (MRM). In this method in order to calculate the real contrast agent uptake of an area of breast tissue the signal intensity of each voxel before contrast agent application has to be subtracted from the signal intensity after contrast agent application. Thus registering a first image taken at a time in which no contrast agent was present in the imaged tissues with a second image taken at a second or later time at which a contrast agent was present and perfusing in the imaged tissues helps in suppressing at a high degree of success the artefacts which would appear in the said image data subtraction due to patient movement if no registration would be carried out. The mean idea is that subtracting the said two images would lead to high intensity levels of the pixels or voxels corresponding to the tissue zones where the contrast agent is pooled. All the other zones where no contrast agent contribution is present would appear as low intensity pixels or voxels and particularly dark grey or black.

Further improvements are subject matter of the dependent claims.

The features of the present invention and the deriving advantages will appear more clearly from the following more detailed description of the method and from the annexed drawings and figures in which:

Figure 1 illustrates a schematic example of the breasts fixation means used in breast MRI.

Figure 2 shows the subtraction process and occurring movement artefacts when no registration step is carried out: At the upper left and right are two cross-sectional images of the breasts of the same MR-scanner position. The second image has been measured after contrast media administration about 2.5 minutes after the first one. Both images are just representative sections of a whole three dimensional set of cross-sectional images.

Figures 3 illustrate schematically the steps of the registration method according to the present invention.

Figure 4 is a schematic view of a digital or digitalized image being formed by an array of 10x10 pixels.

Figure 5 is a schematic view of the image data array corresponding to the image of figure 4 and in which array the visual appearance of each pixel is described by numeric values, for example the intensity of the pixel in a grey scale digital image.

Figure 6 illustrates schematically a first example of a vector used according to the state of the art for coding a target pixel by means of the numeric values describing the pixels appearance, particularly the intensity of pixels of a selected window (illustrated in figure 5).

Figure 7 illustrates schematically the pixel coding method according to figure 6 in which the components of the vector are expressed in a more generalized manner.

Figure 8 illustrates a generic 3x3 windows centered at a target pixel with coordinates m,n, the generic gradient matrix and one possible way to calculate numeric partial derivatives. We could calculate derivatives also by using some more complex operators like Sobel operator or Frei-Chen operator (Digital Image Processing, W. K. Pratt, John Wiley & Sons, Inc. New York, NY, USA, 1991).

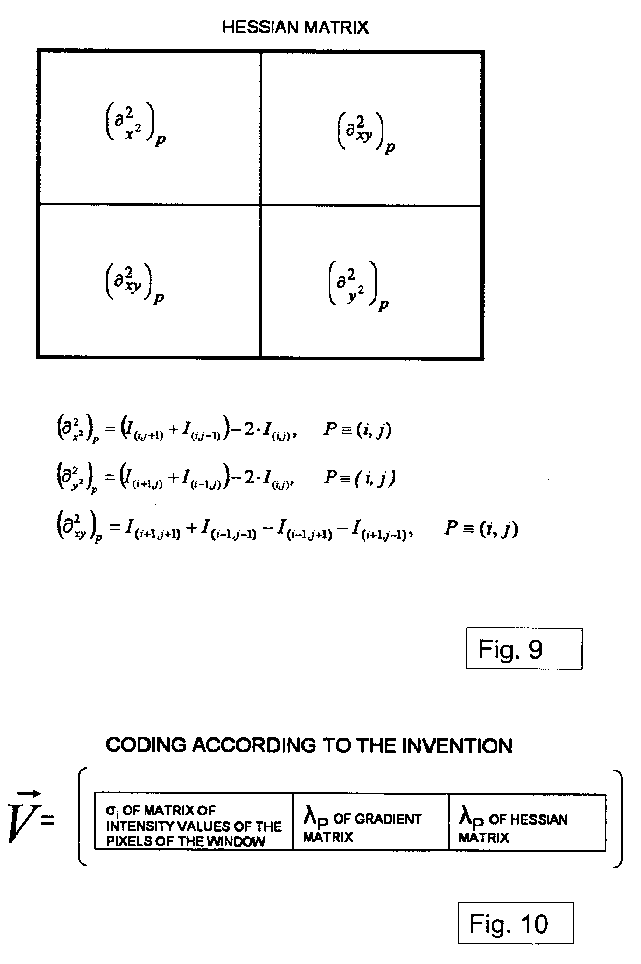

Figure 9 illustrates the generic Hessian matrix and one possible way to calculate numeric second partial derivatives.

Figure 10 illustrates schematically the vector which represents the target pixel according to the present invention.

Figure 11 to 14 illustrates schematically an example of the method for the automatic determination of validly trackable landmarks.

Figures 15 to 18 illustrates schematically how tracking is carried out.

Figure 19 illustrates the result of the present invention by showing two images of the breasts taken at different times before and after contrast media administration and the image obtained by the subtraction of both after having carried out the feature tracking and the registration of the said images in comparison to the examples of figure 2 which is illustrated at the left side of the figure. All images of figure 2 and 19 have been taken from the same MR exam without applying any further processing beside registration.

Figure 20 illustrates a first embodiment of the method according to the present invention of the steps for determining the quality of validly or non validly trackable feature of a pixel by means of the corresponding characteristic parameters Figure 21 illustrates a second embodiment of the method according to the present invention of the steps for determining the quality of validly or non validly trackable feature of a pixel by means of the corresponding characteristic parameters.

Registration of images is an important process which allows to carry out several kind of investigations, particularly in the field of medical diagnostics.

As it will appear clearly from the following example one case were registration is important is in the determination of the so called Perfusion behaviour of imaged regions. In this case a sequence of images is acquired of a certain anatomical district the images of which sequence are taken at different time instants. A first image of the sequence is acquired at a time were in the anatomical district there is no contrast agent. The following images of the sequence are acquired after that a contrast agent has been delivered to the anatomical district and at different time intervals. Contrast agents enhances the response of the vascular and lymphatic flows with respect to the surrounding tissues in an anatomical district so that it is possible to better view this flows. Since tissues affected by a pathology like tumoral tissues or other lesions are characterised by an enhanced vascularisation, measuring the Perfusion behaviour of the imaged tissues is a mean for individuating this pathological tissues and rendering the same better visible in an image. Enhanced vascularisation in some regions of the imaged anatomical district has as a result that in this region the contrast agents will be more concentrated than in other regions. Furthermore since from the time of delivery the contrast agent requires some time in order to diffuse in the tissues by means for the vascular rand lymphatic system enhanced vascularisation will provide for a more rapid increase in the contrast media in the regions were this enhanced vascularisation is present and at the same time in a more rapid reduction of the concentration of contrast agents after a maximum peak of contrast agent has been reached when compared to normally vascularised regions of the imaged anatomical district.

Since a time sequence of images is acquired which is spread over a relatively long time interval, motions of the imaged anatomical district can occur between one image and the following in the sequence. This motions are determined by motions of the patient and also by physiological reasons such as heartbeats and breathing.

Perfusion behaviour is determined by subtracting from each image of the time sequence being acquired after delivery of the contrast agent in the imaged anatomical district, the image acquired when no contrast agent was present in the said anatomical district. Besides the fact that this subtraction will substantially shut out or render the pixel of the regions of the image where no Perfusion of contrast agents has occurred black or nearly black while leaving the regions where contrast agent are present with their bright appearance as it is illustrated in figure 2, determining for each subtraction image (as defined above) the mean intensity and drawing the mean intensity of each subtraction image of the sequence of images in a graph will allow to draw a so called Perfusion curve which is a measure of the Perfusion behaviour of the region were the contrast agents has been detected.

Registration is also important when the imaging is carried out at different time intervals for carrying out a diagnostic follow up or a follow up in time of the development of a pathology in an imaged region when a therapy is applied. Here the time intervals between one image and the following of the sequence are longer and the motions between one image and the other even more dramatic then in the previous case of Perfusion investigations, since the patient has to be anytime positioned again relatively to the apparatus for acquiring the image.

In other cases images of an anatomical district has to be registered which have been acquired with different imaging techniques. This is important since different imaging techniques often highlights or reveals different aspects or qualities of the imaged objects in an anatomical district so that a correlation or combination image can provide for more complete and detailed information about this objects or for a better and a clearer combination image.

When rigid structures are imaged registration can be considered as a simple translation or roto-traslations of the images of the sequence one with respect to the other. When the imaged objects consist or are embedded in soft tissues then also a deformation of the imaged objects and of the imaged region can occur so that registration has to consider also this effects.

A typical case of registration of time sequences of diagnostic images is the case of the breast cancer investigations which are carried out by applying the Perfusion behaviour determination method.

In figure 1 a typical apparatus for fixing the breasts of a patient is illustrated. Normally MR imaging is performed on a 1.0 or 1.5 Tesla imager with the manufacturer's double breast coil used (often a single breast coil device in the USA) while the patient is in prone position. The protocol does at least include a dynamic contrast enhanced T1-weighted sequence in any orientation with an acquisition time of something between 30 and 180s (individual protocols may differ, also fat suppression could be used additionally). At least one measurement is acquired before and several measurements after bolus injection of gadopentetate dimeglumine in doses of 0.1 mmol/kg up to 0.2 mmol/kg body weight or any other paramagnetic MR contrast agents.

At least a first volume of MRI images is acquired at a time t0 before a contrast media is injected into a antecubital vein and therefore arriving in the breasts tissues. At least one further volume of images is acquired directly after contrast media injection at time t1. Normally a sequence of time delayed volumes is acquired (e.g up to six times the same volume in a row after contrast media application).

Figure 2 illustrates two images taken out of a three-dimensional volume of cross-sectional images one takes at the time instant to before contrast media delivery and the second taken at the time instant t1 after delivery of the contrast media. The subtraction image namely the image resulting form the subtraction pixel by pixel of the first image form the second one is also illustrated. Here no registration has been carried out ad it is evident that also pixels remain alight where no contrast agent uptake has occurred such as in the regions indicated by the arrows.

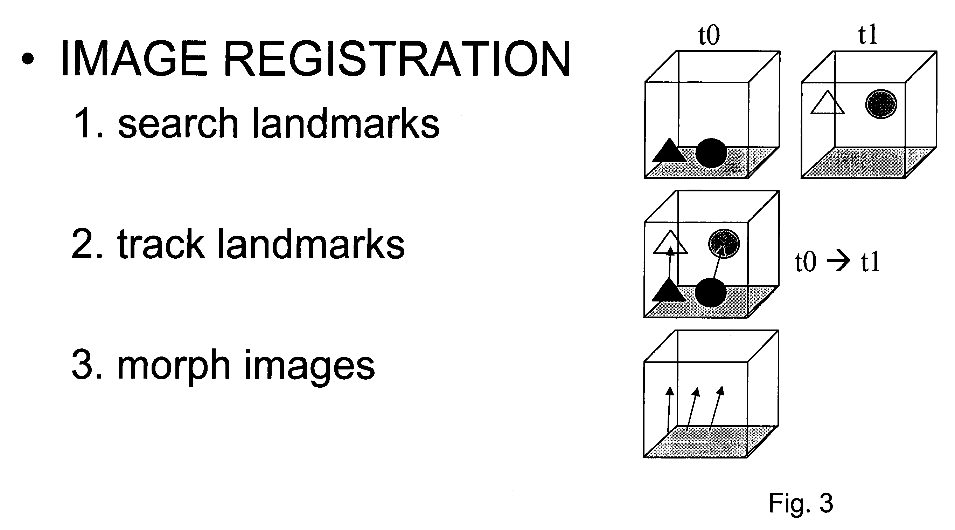

Figure 3 illustrates the main steps of the registration process which are common also to conventional registration methods.

An image volume represented by a cube is imaged at different time instants to and t1. In the image volume two objects here represented by a triangle and a circle are selected as landmarks. Due to motion the position of the two objects in the image volume at t0 does not correspond to the position of the same objects in the image at t1.

So the first step is individuating in an image the landmarks to be tracked.

Once the landmarks to be tracked which are represented by the triangle and the circle has been individuated the tracking step is carried out which allows the determination of so called motion vectors.

By means of these vectors it is possible to generate a vector fields spread over the image which describes the motion of the imaged anatomical district as a global motion and also as a local motion of certain regions of the imaged anatomical district. Applying the inverse motion vector field to the image the effect of motions occurred between the time instants of acquisition t0 of the first image and the time instant of acquisition t1 of the second image will be compensated.

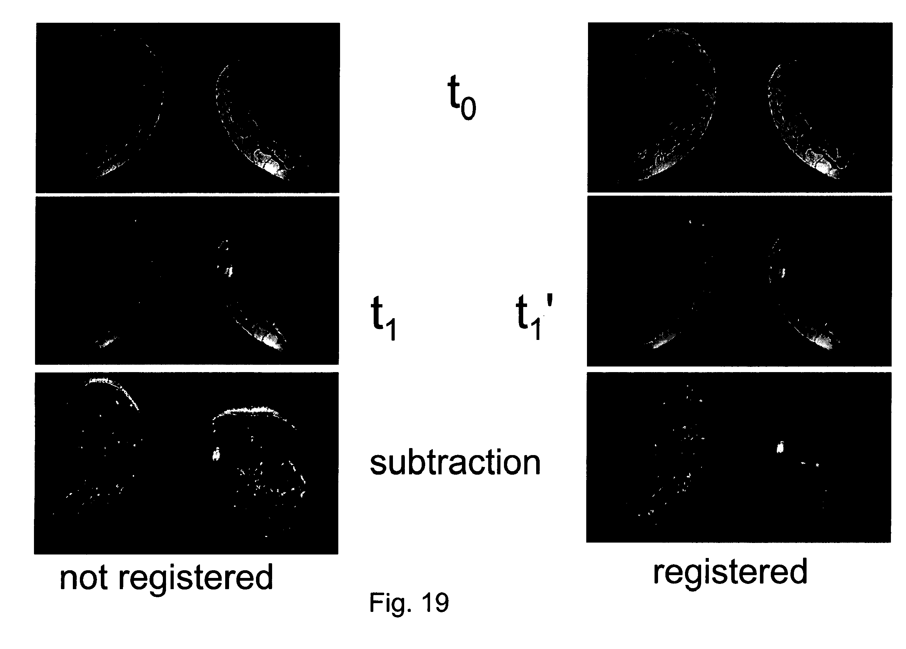

The effect of the registration on the example of the Perfusion examination of the breasts can be appreciated in figure 19. Here the left hand sequence of images relates to the case were the images of the breast taken at t0 and t1 are not registered the lower image is the subtraction image which correspond to the one of figure 2. The right hand sequence of images illustrates the two images taken at the time instants t0 and t1 but the image taken at t1 has been processed with the repent registration method. In the last image corresponding to the subtraction image it can be clearly appreciated that many regions where the pixels of the image are still alight in the left hand subtraction image have disappeared or the corresponding pixels has been completely shut off or are characterised by a dark grey appearance.

The present invention is directed to ameliorate the first step of the registration process of images which is a critical one also for the following steps. Definition of reliable landmarks in the images is critical for achieving better registration results. Thus a more precise and complete way to determine characteristic qualities of the pixels or voxels of an image which have a very high probability of being validly trackable landmarks is the aim of the present invention.

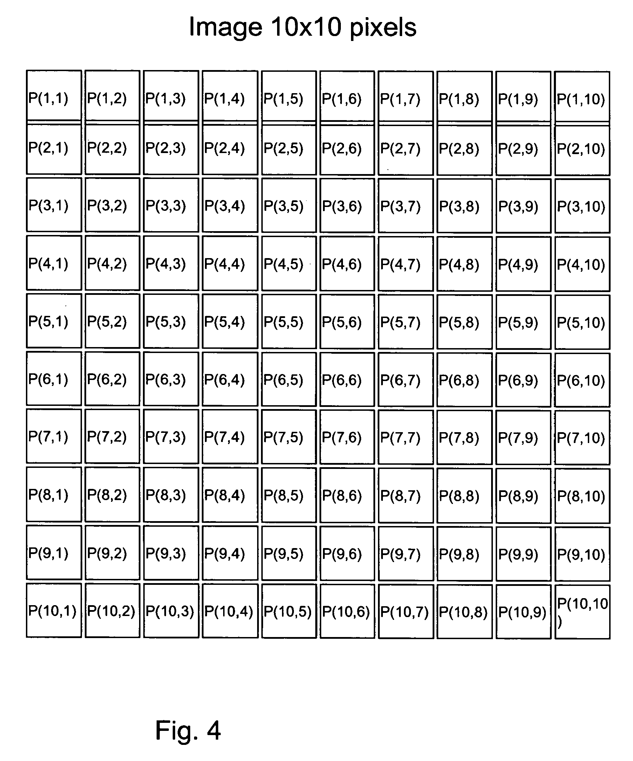

Referring to figure 4 and for simplicity sake to the two dimensional case, a digital or digitalized image is formed by an array of pixels P(n,m), with n,m= 1,...,N. Each pixel is a small dot on a monitor or screen or on a paper print which dot has a certain appearance. The appearance of the dot can be represented by numeric data. In a so called grey scale image, each dot has a certain intensity which corresponds to a certain level of grey in the said grey scale. In a colour image more parameters are normally necessary in order to fully describe by numeric data the appearance of the pixel. Several systems has been defined for representing univocally the appearance of the pixel in a colour image. One possible system is the so called and well known HSV (Hue, Saturation, value) or the so called RGB (Red, Green, Blue) system. In the present simplified example only the intensity I(n,m) has been indicated, since it is obvious for the skilled person that these value has to be substituted with the corresponding numeric data if a colour image is processed.

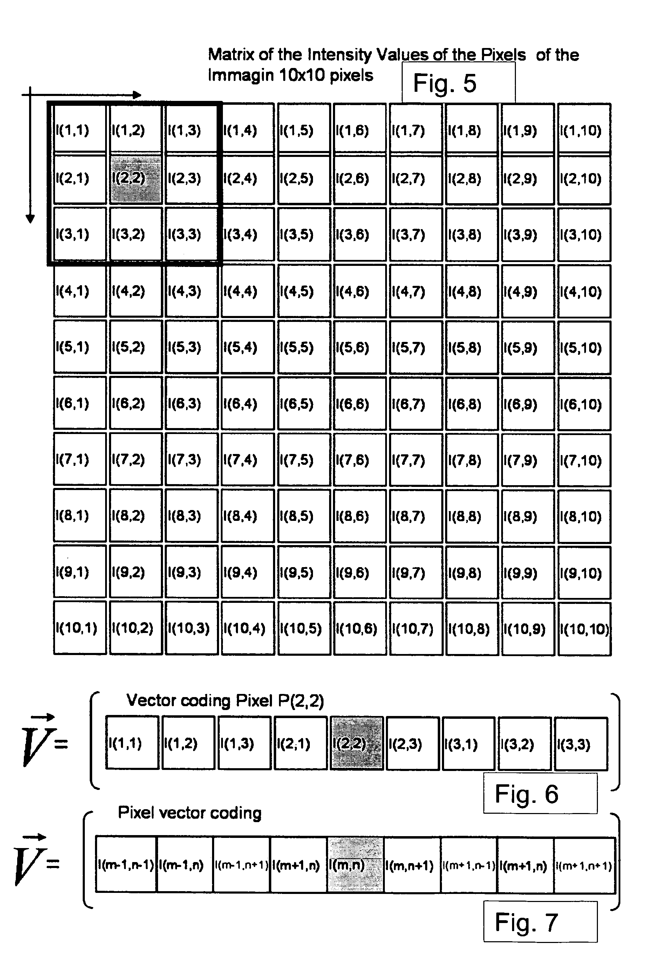

So an array of numeric data I(n,m) with n,m=1,..,10 as illustrated in figure 5 corresponds to an image comprising pixels P(n,m) with n,m=1,..,10 as the schematic array of pixels of figure 1 and the array of numeric data is a matrix.

Each pixel P(n,m) is univocally related to the numeric data I(n,m) which describes numerically its appearance, for instance the grey level of the pixel in a grey scale digital image.

A three dimensional image can be defined as a volume image being formed by a certain number of adjacent cross-sectional (two dimensional) images. In this case the image is formed by so called voxels and the array is three dimensional so that the numerical matrix of image data is also three dimensional. In reality the cross-sectional images have a defined thickness and thus this images are more slices than pure two dimensional images. Under this point of view it would be more precise to speak always of voxels. Nevertheless the visual representation of the cross-sectional images on a monitor screen is a pure two dimensional image where the thickness of the slice has been not considered so that in this case pixel is an appropriate definition of the image dots.

As illustrated in figures 5, 6 and 7, a target pixel of an image can be coded by a vector whose components contain information also about the pixels surrounding the said target pixel. Normally said surrounding region consists of a window centered at the target pixel with dimensions $(2\omega+1)\times(2\omega+1)$ pixels, where $\omega$ is an integer arbitrarily defined ($\omega$=1,2...,N) by the user and is here called "step".

The above definition of a window formed by surrounding pixels is equivalent to the definition of surrounding pixels of gradient x in which x is an integer and where this integer indicates the distance in steps from a target pixel to the neighbouring pixels. Considering a pixel centred in the said window as the target pixel, the window comprising the surrounding pixels of gradient 1 is the shell of pixels directly adjacent to the target pixels, the surrounding pixels of gradient 2 comprises the pixels of the two nearest shells of pixels surrounding the target pixels and corresponding to the one distance step from the target pixel and to two distance steps from the target pixel in each direction of the array of pixels forming the image. This definition applies correspondingly also for 3D images formed by an array of voxels.

The smallest size of said window consists in an array of pixels having 3x3 dimension and which central pixel is the target pixel, the step $\omega$ also defined above as gradient is equal to 1. A greater windows may be chosen too such as for example 5x5 or 7x7 pixel window, applying respectively the step or gradient $\omega=2$ and $\omega=3$. For simplicity sake in the present example a windows corresponding to an array of 3x3 pixels centered at the target pixel is chosen.

This windows is illustrated in figure 5 with reference to the matrix of numeric data representing the pixels of the image.

The windows W comprises 9 pixels one of which is the target pixel. The window illustrated in figure 5 is centered at the target pixel P(2,2) and comprises the pixels P(1,1), P(1,2), P(1,3), P(2,1), P(2,2), P(2,3), P(3,1), P(3,2), P(3,3) represented by the corresponding numeric values, namely the numeric parameters related to the signal intensities of the said pixels I(1,1), I(1,2), I(1,3), I(2,1), I(2,2), I(2,3), I(3,1), I(3,2), I(3,3).

The target pixel P(2,2) is coded using also the information about the neighboring pixels in the window W so that the relation of the said target pixel to a certain surrounding region in the image is also considered. The Intensities of the said pixels are taken together with the intensity of the target pixel P(2,2) as the components of a vector representing the said target pixel P(2,2) and the relation of the surrounding pixels as defined above.

The said vector is illustrated schematically in figure 6. As it might appear clearly each vector representing a target pixel has nine components.

Figure 7 schematically illustrate the generic expression of the said vector for coding a target pixel. In this case the target pixel is represented by its intensity and is defined as the pixel P(n,m) having an intensity I(n,m).

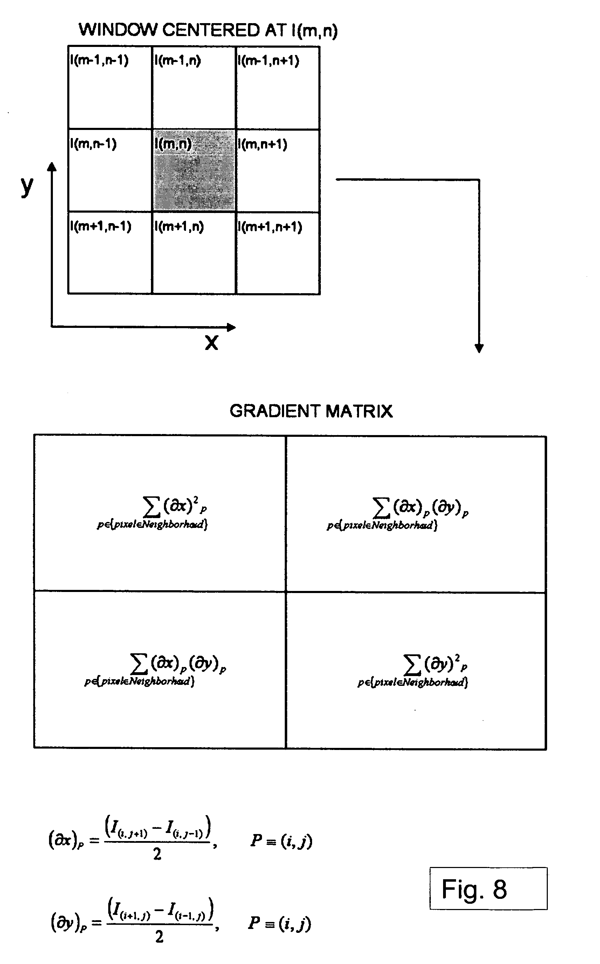

In figure 8 the window W which refer to the vector of figure 7 is illustrated and also its transformation in the so called gradient matrix.

As it might appear clearly to the skilled person the array of numeric values representing the pixels and in this case the array of the intensity data I(m-1,n-1), I(m-1,n), I(m-1,n+1), I(m,n-1), I(m,n), I(m,n+1), I(m+1,n-1), I(m+1,n), I(m+1,n+1) of the pixels within the window W is a two dimensional object so that two directions can be defined and the gradient in the two directions can be evaluated for each pixel in the window considered.

The gradient matrix is diagonalizable so that it can be represented by its eigenvalues $\lambda_p$ with p=1,2 in this case and $\lambda_1 \neq \lambda_2$.

The original matrix of the intensities I of pixels of the selected windows W can be further processed and the so called Hessian matrix can be computed for the said original matrix. Also in this case the Hessian matrix can be represented by its eigenvalues $\lambda_p$.

When considering the 3x3 matrix of intensities values I of the selected windows, normally the said matrix will not be diagonalizable and the eigenvalues will not be meaningful as described above. So considering this more generic case the original matrix of the intensities I of the pixels of the selected windows W as illustrated in figure 8 can be represented by the so called singular values $\sigma_i$.

Using the singular values of the intensity matrix corresponding to the selected windows alternatively or in combination with the eigenvalues of the gradient matrix and of the Hessian matrix of the intensity matrix corresponding to the selected windows, it is possible to generate a vector for univocally coding the corresponding target pixel. The components of the said vector consist in the said singular values of the matrix of the intensity values corresponding to the pixels of the selected window and to the eigenvalues of the gradient matrix and of the Hessian matrix obtained by processing the said matrix of the intensity values corresponding to the pixels of the selected window.

Although the examples illustrated are limited to a particular choice of transformations of the original matrix of the intensity values corresponding to the pixels of the selected window, as it has been disclosed above, further transformations can be applied alternatively or in combination. So for example a wavelet decomposition can be carried out and the mean and detail values can be used all or at least a part of them as components of the coding vector of the target pixel.

Alternatively or in combination the autocorrelation transform of the original matrix of the intensity values corresponding to the pixels of the selected window can be used and the parameters obtained can be used all or at least some of them as components of the vector for coding the target pixel.

Wavelet transform can also be used as preprocessing steps. The matrices of numeric data obtained can be then processed with the corresponding gradient matrix and/or the corresponding Hessian matrix and their singular values and/or eigenvalues alternatively or in combination can be determined.

A further transform of the original matrix representing the window of pixel can be used which consist in the so called co-occurrence transform of the matrix representing the pixels or voxels of the said window. In this case the singular values or the eigenvalues of this co-occurrence matrix can be used as parameters describing the target pixel.

It has again to be stressed out that the above description of several parameters for characterizing a target pixel in a selected windows comprising a certain number of neighbouring pixels is limited to the two dimensional case only for simplicity sake and that all the above describe choices can be applied also to a three dimensional case.

As a result of the above description each target pixel or voxel of an image can be represented by one or more of the above disclosed parameters. These parameters considers implicitly the relation ships of the target pixel or voxel with the pixels or voxels of the selected windows and are able each one to describe certain features of the image corresponding to the selected windows. So considering two or more or all of these parameters as the numerical values for determining if a pixel or voxel is or coincides with a validly trackable landmark in the image will provide for the identification of extremely reliable landmarks.

According to a first way to select validly trackable landmarks using at least part of the above described parameters relating to a target pixel or a target voxel for each one of the said parameters a threshold can be determined for example basing the definition of the numerical values of the thresholds on experimental data.

Once thresholds have been defined for each parameter consisting in a component or a group of components of the vector for coding each target pixel or voxel as described above, a function can be defined setting the criteria for determining if the target pixel or voxel corresponds or not to a validly trackable landmark by comparing each of the said parameter or a combination of a group of the said parameters with the corresponding threshold.

A very large number of functions are possible defining different criteria and considering different possibilities.

The most simple but very time consuming solution is to define a threshold for the value of each parameter consisting in the components of the vector coding the pixel or voxel and comparing each parameter with the related threshold relatively to the fact if the parameter value is higher or lower than the threshold value. A comparison result for each parameter is obtained which can be represented by numerical values such as 0 and 1 corresponding respectively to the fact that the parameter is lower or higher with respect to the associated threshold or that the comparison result indicates a non validly trackable landmark or a validly trackable landmark. Since for a validly trackable landmark some of the characteristic parameters may have a negative comparison result, i.e. a comparison result which only for the said characteristic parameter indicates that the landmark is not validly trackable, the vector which components consist in the numeric value of the comparison result of each separate comparison of a characteristic parameter with the related threshold can be further processed in order to obtain a global evaluation parameter consisting in a numerical value which summarizes the comparison results of each characteristic parameter with its threshold.

This allows to identify validly trackable landmarks although the comparison result for one or a subset of characteristic parameters has indicated on the contrary that the landmark is not validly trackable.

The above global evaluation of the results of the comparison of the characteristic parameters with the related threshold can be determined by calculating a global evaluation parameter as a function of each of the results of the comparison or of each of the characteristic parameters.

For example the global evaluation parameter can be calculated as the mean value of the set of characteristic parameters. This global evaluation parameter can be then compared with a global threshold. In this case the global threshold for the global evaluation parameter can be determined as a function of each of the single thresholds related to each characteristic parameter, for example as the mean value of the thresholds.

Another way of determining a global evaluation parameter is to define a vector which components are formed by the characteristic parameters and then calculating the modulus of the vector, i.e. its length. The global threshold to be compared with the modulus of the said vector which is the global evaluation parameter can be calculated as the modulus of a threshold vector which components are formed by the thresholds related to each single characteristic parameter.

Still another way may consist in parameterizing the comparison results of each characteristic parameter with the corresponding threshold by means of a comparison evaluation variable which can assume two values for example 0 or 1 depending if the corresponding comparison result of a characteristic parameter with the corresponding threshold indicates a non validly trackable landmark or a validly trackable landmark.

Thus the results of each comparison of a characteristic parameter with the corresponding threshold can be numerically represented and the global result can be in form of a vector the components of which are the values of the comparison evaluation parameter. Relating to the above example where the global evaluation parameter is defined as having one of two discrete values 0 and 1, the components of the comparison evaluation vector will consist in a set of numerical values of 0 and 1.

Similarly to the above described options the global evaluation parameter can be calculated as the modulus of this comparison evaluation vector or as the mean value of its components.

As a further feature of the above method one or more subsets of characteristic parameters can be defined which are used to calculate a secondary characteristic parameter as a function of the characteristic parameter of the said subset.

Any kind of function can be used to determine or to calculate the secondary characteristic parameter.

According to a special way of carrying out the determination of secondary characteristic parameters each subset of characteristic parameters comprises the characteristic parameters relating to the same kind of function of the numeric appearance parameters describing the appearance of the target pixel or voxel and of each or a part of the pixels or voxels of the said pixel or voxel window and to the same kind of function of one or more characteristic parameters of either the numerical matrix or of the same transformation of the said numerical matrix representing the pixels or voxels of a window;

Due to this the entire set of characteristic parameters is divided in subsets of characteristic parameters which are summarized by a secondary characteristic parameter determined as a function of the characteristic parameter of each subset.

According to a practical example, the values of the intensity signals of the pixels or voxels within a certain window comprising the target pixel or voxel and the intensity signal of the said target pixel or voxel can be defined as forming a subset of characteristic parameters. The secondary characteristic parameter summarizing these values can be calculated as the mean intensity signal value of the intensity signals of the target pixel or voxel and of the pixels or voxels included in the windows.

The same mean function can be used to calculate a secondary characteristic parameter from the singular values of the matrix of numeric image data describing the pixels or voxels of a windows and the target pixel or voxel and/or from the eigenvalues of the gradient matrix or from the eigenvalues of the Hessian matrix or of the singular values of the autocorrelation matrix.

The above steps consist in reducing a set of primary characteristic parameters having a certain number of parameters in a set of secondary characteristic parameters having a reduced number of parameters.

Similarly to the evaluation of the set of characteristic parameters which can be defined primary characteristic parameters according to the above, the secondary parameters can be used for determining if a pixel or voxel corresponds to a validly trackable landmark or to a non validly trackable landmark. The secondary parameters can be processed by mans of the same steps applied to the primary characteristic parameter. So secondary thresholds can be defined, as well as comparison steps with the secondary parameter with its secondary threshold can be carried out. Also in this case a global comparison evaluation parameter can be determined which is compared to a global threshold.

Also in the case of the said secondary characteristic parameters, which are obtained by grouping the characteristic parameters according to the criteria disclosed above, a combination of the single secondary characteristic parameters and of the corresponding threshold can be made for example a weighted sum or any other kind of weighted combination and the comparison can be carried out at the level of the so defined global secondary characteristic parameters and global secondary characteristic threshold.

In principle each of the above disclosed methods of carrying out the comparison of the principal characteristic parameters with their corresponding threshold can be applied to the set of secondary characteristic parameters. Particularly advantageous is to provide for a comparison result vector which includes different discrete values for each comparison of each characteristic parameter with its related threshold, for example 0 and 1 depending if the secondary characteristic parameter value is above or below the threshold value.

The global result can then be determined as the sum and particularly the weighted sum of the components of the comparison result vector.

The advantage is that due to a reduction in the number of parameters calculation and evaluation is simpler. Furthermore the kind of functions chosen for determining the secondary characteristic parameters allows to limit the incidence of values of one or more of the said parameters which are not correct or lie outside a statistical error tolerance.

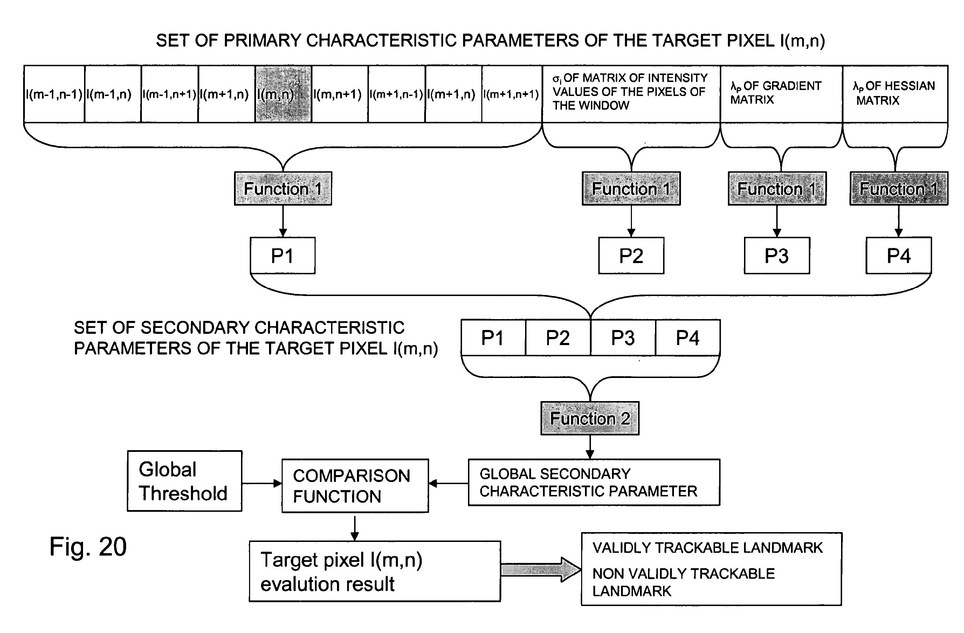

In determining the global evaluation parameter for the comparison it is possible also to define weights by means of which each primary or secondary parameter is weighted correspondingly to its relevance in determining if a pixel or voxel can be considered being a validly trackable or non validly trackable landmark. Figure 20 is a schematic representation of the above described steps for evaluating if a pixel or voxel corresponds to a validly or non validly trackable landmark by considering the characteristic features of the said pixel or voxel as defined in the above description.

The case illustrated in figure 20 refers to the one in which secondary characteristic parameters are determined for each target pixel or voxel as a function of selected subsets of the characteristic parameters of the said target pixel or voxel defined here as primary characteristic features. Furthermore for simplicity sake the two dimensional case is considered.

Nevertheless as explained in the following the mechanism of the processing steps can also be applied to the primary characteristic parameters.

A set of primary characteristic parameters is determined as explained above in relation to figures 4 to 8. The target pixel is the one indicated with I(m,n). The neighbouring pixels are chosen as the ones comprised in a window having 3x3 pixel dimension. The primary characteristic features are the intensities I of the neighbouring pixels within the selected windows and the intensity of the target pixel, the singular values $\sigma_i$ of the matrix of intensity values of the pixels comprised in the selected windows including the one of the target pixel; the eigenvalues of the gradient matrix of the matrix of intensity values of the pixels comprised in the selected windows including the one of the target pixel and the eigenvalues of the Hessian matrix of the matrix of intensity values of the pixels comprised in the selected windows including the one of the target pixel.

It has to be stressed out that the kind of characteristic parameters chosen in the example of figure 20 is not a limiting feature since any further characteristic parameter determined as described in the preceding description can be added or put in place of one of the illustrated characteristic parameters.

Each one of the said kinds of primary characteristic parameters is defined as a subset of characteristic parameters. This is indicated in figure 20 by means of the curly brackets. A secondary characteristic parameter is determined from each subset of primary characteristic parameters by means of a function indicated as function 1. The function for determining the secondary characteristic parameter out of the corresponding subset of primary characteristic parameters can be identical for each subset or different.

Examples of functions can consist in the mean value function or the summation function of the summation of the square function or the modulus function, etc.

Other kind of functions may provide a comparison with a threshold so to eliminate at least some or all but one of the characteristic primary parameters of a subset. For each subset a secondary characteristic parameter can be so determined and in figure 2 this secondary characteristic parameters are indicated with P1, P2, P3, P4. at this point any of the steps disclosed above can be carried out for determining if the target pixel can be considered a validly trackable landmark. So separate thresholds can be determined for each secondary characteristic parameter and a separate comparison of each secondary characteristic parameter with the corresponding threshold can be carried out. The decision whether or not the pixel is validly trackable landmark is taken basing on the results of these comparison by means of a comparison global evaluation process as already disclosed above.

In the present example a global secondary characteristic parameter is determined as a function of the secondary characteristic parameters as indicated by function 2 in figure 20. The function 2 can be equal to function 1 or one of the examples indicated for the function 1.

A global threshold, determined according to one of the above already disclosed ways, for example by determining the separate thresholds for each secondary characteristic parameter and then determining the global threshold out of this set of separate thresholds by a function which can be the same one or different as the function 2 for determining the global secondary characteristic parameter.

A comparison of the global secondary characteristic parameter and the global threshold is carried out by means of a comparison function and the result of the comparison gives an evaluation of whether the pixel I(m,n) can be considered coinciding with a validly or with a non validly trackable landmark.

It has to be observed that as an alternative a function could be chosen for determining the global evaluation parameter out of all of the primary characteristic parameters and a further function or the same function for determining out of the thresholds define for each primary characteristic parameter a global threshold. Comparison function is then applied to this global threshold for the primary characteristic parameters and to the global evaluation characteristic parameter.

In a preferred embodiment, the different functions indicated with function 1 and function 2 can be linear combinations, preferably weighted linear combinations of the said primary or secondary characteristic parameters, such as for example weighted sums. In the same way the thresholds for the secondary characteristic parameters and the global threshold can be calculated as the weighted sum respectively of the thresholds for each primary parameter and the threshold for each secondary parameter.

A particularly advantageous embodiment comprises the following steps:

Carrying out the comparison of each of the primary characteristic parameters with their thresholds and defining a comparison results vector each component of which is the result of the comparison of each primary parameter with the corresponding threshold. Defining the comparison results by the value 0 is the primary parameter is lower than the threshold and 1 if the primary parameter is higher than the corresponding threshold. The comparison result vector being formed by a series of values 0 and 1. Combining the components of the comparison results vector. Particularly determining the weighted sum of the components of the comparison result vector and comparing this results with a global threshold. The global threshold can be determined by means of experimentation or as the normalized weighted sum of the thresholds for each of the primary characteristic parameters. Deciding whether the pixel or voxel or the group of pixels or voxels is a valid landmark to be tracked relatively to the comparison result of the weighted sum of the components of the comparison result vector with the global threshold.

Alternatively, when the primary parameters are grouped together in order to form secondary parameters as disclosed above, the same steps can be applied to the secondary characteristic parameters. In this case a comparison results vector is defined the components of which are the results of the comparison of each secondary characteristic parameter with the corresponding threshold. Also here numerical values, particularly 0 and 1 can be chosen for describing the comparison results corresponding respectively to the condition in which the secondary parameter is lower or higher than the corresponding threshold. The validity of the pixel or voxel or of a group of pixels or voxels relatively to the fact if this pixel or voxel or if this group of pixels or voxels are good landmarks to be tracked is then determined by comparing the weigthed sum of the components of the comparison result vector with a global threshold.

Characteristic parameters can be also evaluated in different ways depending on the kind of the said characteristic parameters or their mathematical meaning.

So considering for example the eigenvalues of the Hessian matrix which are comprised in the list of primary characteristic parameters it is possible to evaluate the significance of a pixel or a voxel from the values of the said eigenvalues of the Hessian matrix.

It is also possible to evaluate the significance of a pixel or voxel of an image by considering the wavelet transform coefficients. This technique is disclosed in greater detail in the documents Wavelet-based Salient Points: Applications to Image Retrieval Using Color and Texture Features, E. Loupias, N. Sebe, Visual'00, pp. 223-232, Lyon, France and Image Retrieval using Wavelet-based Salient Points, Q. Tian, N. Sebe, M.S. Lew, E. Loupias, T.S. Huang, Journal of Electronic Imaging, Vol. 10, No. 4, pp. 835-849, October, 2001.

So further to the above disclosed thresholds for evaluating if a characteristic feature is of a pixel or of a voxel corresponds to the one of a trackable feature or landamark, i.e. pixel or voxel of an image some characteristic parameters may be evaluated by means of alternative methods as for the eigenvalues of the Hessian matrix and the coefficients of the wavelet transform.

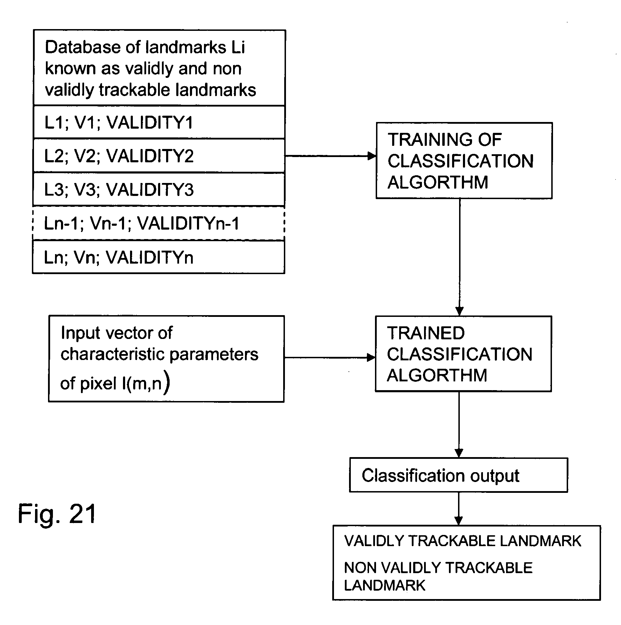

Relating to figure 21 a further embodiment of evaluating the quality of validly or non validly trackable landmark is illustrated. Here use is made of a so called classification algorithm such as a clustering algorithm or a predictive algorithm such as an artificial neural network or a statistical algorithm.

In order to be able to carry out this embodiment, firstly a database of pixels corresponding to landmark of which are known to be validly or non validly trackable has to be constructed. Here for each landmark Li, with i=l, .., n, a vector is constructed which components are the primary or the secondary characteristic parameters determining by applying the above described method steps of the pixel or voxel of the images in which the said landmarks Li has been identified.

The components of the vector further comprises a validity variable which can assume two different values indicating respectively the quality of validly trackable or non validly trackable landmark. The said database is schematically represented in figure 21. here Li are the landmarks, Vi is the vector of corresponding characteristic features and Validity is the parameter describing if the landmark Li or pixels coinciding with it are validly trackable or not. The database records are used to train in an usual manner the classification algorithm. Once the algorithm has been trained the characteristic parameters of a pixel I(m.n) are processed by it and the classification algorithm gives as an output the values of the validity variable and thus the prediction or decision whether the pixel I(m,n) coincides with a validly or non validly trackable landmark.

It is important to stress out that a combination of the evaluation process according to this embodiment and to the previous one of figure 20 can also be applied. In this case instead of using the primary characteristic parameters, only the secondary characteristic parameters are used for constructing the input data vector for the target pixels or voxels and for the landmarks of the training database.

Relatively to different evaluation steps disclosed above it is also to be considered that further landmark confirming or discarding steps can be carried out particularly in the case when two landmarks identified as validly trackable falls within a certain distance one form the other. This can be done by comparing at least one, a part or all the primary characteristic parameters or at least one, a part or all of the secondary characteristic parameters of the said two landmarks and applying a choice function to the comparison result which describes a choice criteria between the two landmarks.

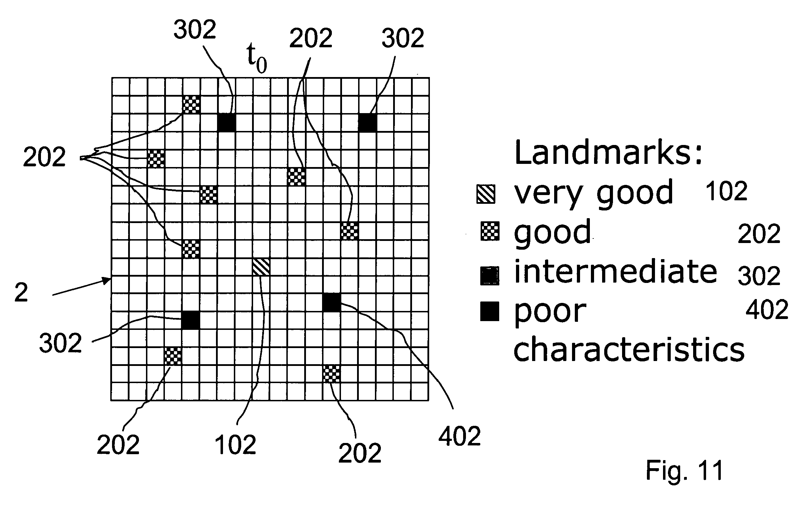

In the following an example of automatic landmark identification is illustrated by means of figures 11 to 14. The said graphic examples has been made with reference to two dimensional images in order to simplify understanding. The Generalisation of the method to the three dimensional images is given by the general description by means of the mathematical formalism which is here briefly described.

Automatic feature selection working in three dimensions and therefore in a set of cross-sectional images representing a three dimensional volume of data is a substantial enlargement of Lucas and Kanade's two dimensional feature detection algorithm .

Two image volumes of the same patient, which have been recorded with a little difference in time, are defined as I and J.

In the first image volume I a certain number of selected voxels has to be identified which will be considered as feature to be tracked between the two volumes.

Let I be the original/first image volume and J the next volume, where the corresponding features have to be found.

The first step consists of the calculation of minimum eigenvalues in the first image volume.

This is carried out as follows:

The first image volume is converted into three gradient volumes Ix, Iy, Iz (x-, y- and z direction of a Cartesian coordinate system describing the image volume) while x, y and z are the coordinates of each single voxel.

Gradient volumes are calculated out of the intensity gradient of each voxels relatively to their neighbouring voxels comprised in a so called window having generally the size of $(2\omega x+1)$ in the x-direction and $(2\omega y+1)$ in the y-direction and $(2\omega z+1)$ in the z direction with $\omega x, \omega y, \omega z = 1, 2, 3, 4,....., n$ voxels.

Considering the size of the neighbourhood of a 3x3x3 array of voxels centred at the target voxel the three gradient volumes are defined by:

a) gradient volume in x direction:

$$I_{\Delta x}(x,y,z) = \frac{I(x+1,y,z) - I(x-1,y,z)}{2}$$

b) gradient volume in y direction:

$$I_{\Delta y}(x,y,z) = \frac{I(x,y+1,z) - I(x,y-1,z)}{2}$$

c) gradient volume in z direction

$$I_{\Delta z}(x,y,z) = \frac{I(x,y,z+1) - I(x,y,z-1)}{2}$$

As a further step for each voxel a gradient matrix G is set up by using all the three previously calculated gradient volumes as indicated above.
The Gradient matrix is generated as follows:

$$G = \begin{bmatrix} m_{200} & m_{110} & m_{101} \\ m_{110} & m_{020} & m_{011} \\ m_{101} & m_{011} & m_{002} \end{bmatrix}$$

with

$$m_{200} = I_{\Delta x}^2(x,y,z) \ ; \quad m_{020} = I_{\Delta y}^2(x,y,z) \ ; \quad m_{002} = I_{\Delta z}^2(x,y,z)$$

$$m_{110} = I_{\Delta x}(x,y,z) \cdot I_{\Delta y}(x,y,z) \ ;$$

$$m_{101} = I_{\Delta x}(x,y,z) \cdot I_{\Delta z}(x,y,z) \ ;$$

$$m_{011} = I_{\Delta y}(x,y,z) \cdot I_{\Delta z}(x,y,z)$$

For each gradient matrix of each voxel the minimum eigenvalue $\lambda$min calculated out of the gradient matrix according to the following:
Defining: Graphics Gems IV, Paul S. Heckbert, 1994, Academic Press, S 193-98,

$$c = m_{200} \cdot m_{020} \ ; \quad d = m_{011}^2 \ ; \quad e = m_{110} \cdot m_{101} \ ; \quad f = m_{101} \cdot m_{101}$$

$$p = -m_{200} - m_{020} - m_{002}$$

$$q = c + (m_{200} + m_{020})m_{002} - d - e - f$$

$$r = (e - c)m_{002} + d \cdot m_{200} - 2(m_{110} \cdot m_{011} \cdot m_{101}) + f \cdot m_{020}$$

$$a = q - \frac{p^2}{3} \; ; \qquad b = \frac{2p^3}{27} - \frac{pq}{3} + r$$

note:

$$\left| 3 \frac{b}{an} \right| \leq 1 \wedge a \leq 0$$

because G is a matrix of central moments
The eigenvalues of the gradient matrix G is computed as

$$\lambda_1 = n \cdot \cos\theta - \frac{p}{3}$$

$$\lambda_2 = n \left[ \frac{\cos\theta + \sqrt{3}\sin\theta}{2} \right] - \frac{p}{3}$$

$$\lambda_3 = n \left[ \frac{\cos\theta + \sqrt{3}\sin\theta}{2} \right] - \frac{p}{3}$$

$$\lambda_m = \min(\lambda_1, \lambda_2, \lambda_3)$$

A threshold is then defined for the minimum value of the eigenvalue $\lambda m$.
The following criteria are then applied to consider whether a voxel is representing a trackable feature or not:

1. If $\lambda m$ is bigger than the threshold, the actual position of the voxel is stored within a list of features to be tracked.
2. If $\lambda m$ is smaller than a percentage of the maximum of all minimum values $\lambda m$ of the eigenvalues, it will be dropped from the list of the features to be tracked.
3. If another feature exists in a defined area (adjustable, e.g. 3x3x3) around the actual feature, the feature with the smaller minimum value $\lambda m$ of the eigenvalue is dropped from the list of the features to be tracked.
4. If the mean signal intensity value of a 3d-neighbourhood (e.g. $\omega$ =1) around the feature position is smaller or equal than a mean signal intensity value threshold at a very low value near zero (e.g. 10), the feature is considered to be located outside the breast within surrounding air and is discarded from the list of features to be tracked.

5. At last only a definable maximum number of features are kept. If more features exist on the list of features to be tracked, features with smaller minimum value λm are dropped from the list.

These steps are visually explained in figures 11 to 14 with reference to a two dimensional case. In this case an array of pixels is illustrated as an array of small squares. Different pixels are indicated which correspond to the position of a selected feature with minimum values of the eigenvalue satisfying the first criteria. These features and their position are highlighted in figure 3 by giving to the corresponding pixel a different appearance. In figure 4 the 5x5 neighbourhood is highlighted by means of circles inscribed inside such a 5x5 array of pixels.

In the examples of figures 11 to 18 the grid represents the voxel array. Each element of the grid is a voxel forming the image.

In figure 11 as an example four kinds of voxels are individuated as landmarks and are sorted according to the minimum eigenvalue of the corresponding gradient matrix. The voxels indicated with "102" are the voxels having the greatest eigenvalue, "202" indicates voxels of great eigenvalue, "302" indicates voxels of small eigenvalue and "402" indicates voxels with smallest eigenvalue.

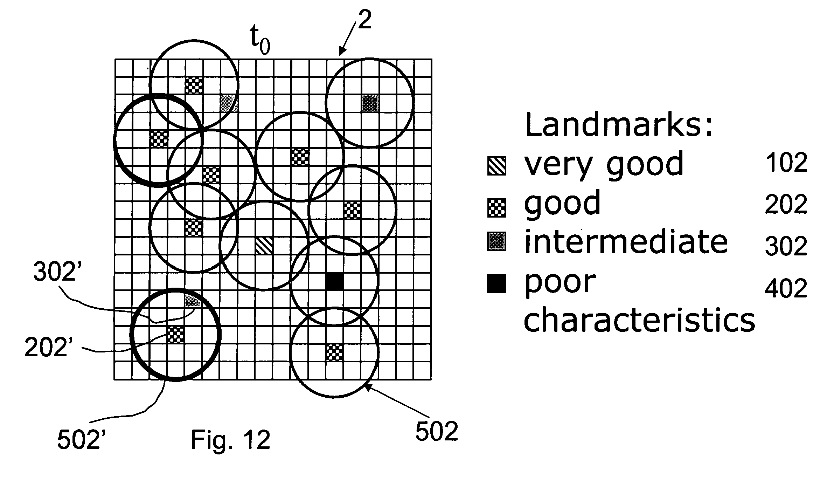

In figure 12, for each voxel a neighbourhood within an Euclidean distance of 5 pixels/voxels in diameter is defined around the centered pixel selected as a feature. The said neighbourhood selection is indicated in figure 4 by means of circles.

In figure 12 a first case of this event is highlighted by the thicker circle indicated with 502'. Here two pixels selected as features are within the same neighbourhood defined above as a Euclidian distance of pixels. These two pixels are indicated with 202' and 302' and according to the above definition one pixel selected as a feature 202' has a gradient matrix with greater eigenvalue than the one the second pixel 302'. Thus this second pixel 302' is discarded.

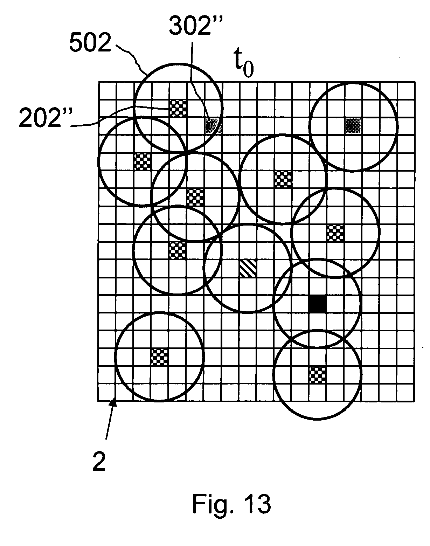

Figure 13 illustrates a further step and the pixel 302' selected as a feature in fig. 11 is not anymore present. Here in figure 13 the pixel 202" is provided with a circle indicating its neighbourhood. A similar situation as in figure 12 is present also here, as in the neighbourhood of pixel 202" a pixel 302" is present which gradient matrix has a smaller eigenvalue than the one of pixel 202".

Therefore also in this case pixel 302" selected as a feature is now discarded from the feature list to be tracked.

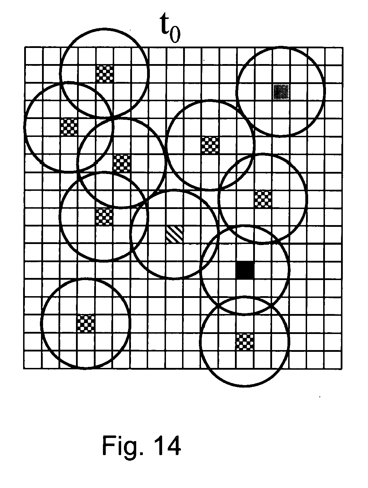

At last in the pixel array of figure 14 only some of the original pixel selected as features are present. Within a single neighbourhood one cannot find more than one feature, now. Therefore trackable feature have been spread out all over the image / volume.

The present example of figures 11 to 14 as well as the mathematical formalism and the criteria for defining a validly trackable pixel is limited to a set of characteristic parameters consisting in the intensity signals of the target pixel and of the pixels of a selected windows and in the eigenvalues of the gradient matrix of the imaged data of the said windows.

According to a further step of the present invention the intensity of the pixels is further investigated and the pixels selected as features having an intensity which is lower than a predefined value are also discarded from the list of pixels corresponding to features to be tracked. A very low threshold of approximately zero is used to characterize features found within the surrounding air. This step is not illustrated but it appears clearly to the skilled person.

Once the pixels or voxels has been determined which are to be considered features of the two 2-dimensional or 3-dimensional images, i.e. validly trackable landmarks, tracking of said features has to be carried out. According to a preferred embodiment of the present invention, this is carried out by using a so called "Pyramidal Implementation of the Lucas Kanade Feature Tracker". A detailed description has been given by Jean Yves Bouguet in the article "Pyramidal Implementation of the Lucas Kanade Feature Tracker, Description of the Algorithm" published By Intel Corporation, Microprocessor Research Labs.

The theory which has been disclosed with reference to a two dimensional example in the above mentioned publication is hereinafter further adapted to a three dimensional case. The following steps have to be carried out for each voxel representing a feature to be tracked which has been individuated according to the above described method and algorithm.

Defining u as a point in volume I and v the corresponding point in volume J. At first step, two pyramids have to be built of the volumes I and J with IL and JL representing the volume at level L 0,..., m with the basement (L=0) representing the original volume. The volume of each following floor is reduced in size by combining a certain amount of pixels in direct neighbourhood to one mean value. The number of additional floors depends on the size of the volume.

4.2. In the following step a so called global pyramidal movement vector g is initialized on the highest floor:

$$g^{L_m} = \left[ g_x^{L_m} \, g_y^{L_m} \, g_z^{L_m} \right]^T = \left[ 0\,0\,0 \right]^T$$

For all levels L the resulting movement vector dL is then calculated.
This is carried out according to the following steps:

a) In each Volume IL the position of point uL is calculated by:

$$u^L = [p_x, p_y, p_z]^T = (\frac{u}{2^L})$$

were $p$ is the actual volume position
b) at each level L of the pyramidal representation of the volumes gradients are calculated in each direction of the Cartesian coordinates x, y, z.
For the Cartesian coordinate x the volume gradient is calculated according to the following equation:

$$I_{\Delta x}(u_x, u_y, u_z) = \frac{I^L(u_x + 1, u_y, u_z) - I^L(u_x - 1, u_y, u_z)}{2}$$

This equation applies correspondingly also for the other two Cartesian coordinates y and z:

$$I_{\Delta y}(u_x, u_y, u_z) = \frac{I^L(u_x, u_y + 1, u_z) - I^L(u_x, u_y - 1, u_z)}{2}$$

$$I_{\Delta z}(u_x, u_y, u_z) = \frac{I^L(u_x, u_y, u_z + 1) - I^L(u_x, u_y, u_z - 1)}{2}$$

C) The volume gradients are then used for computing the gradient matrix according to the following equation:

$$G = \sum_{x=p_x-\omega}^{p_x+\omega} \sum_{y=p_y-\omega}^{p_y+\omega} \sum_{z=p_z-\omega}^{p_z+\omega} \begin{bmatrix} m_{200} & m_{110} & m_{101} \\ m_{110} & m_{020} & m_{011} \\ m_{101} & m_{011} & m_{002} \end{bmatrix}$$

Here the value $\omega$ defines the area size or the neighbourhood influencing the voxels.
The elements of the matrix are obtained in a similar way as the ones according to the above indicated definitions, namely:

$$m_{200} = I_{\Delta x}^2(u_x, u_y, u_z) \; ; \quad m_{020} = I_{\Delta y}^2(u_x, u_y, u_z) \; ; \quad m_{002} = I_{\Delta z}^2(u_x, u_y, u_z)$$

$$m_{110} = I_{\Delta x}(u_x, u_y, u_z) \cdot I_{\Delta y}(u_x, u_y, u_z)$$

$$m_{101} = I_{\Delta x}\left(u_x, u_y, u_z\right) \cdot I_{\Delta z}\left(u_x, u_y, u_z\right)$$

$$m_{001} = I_{\Delta y}\left(u_x, u_y, u_z\right) \cdot I_{\Delta y}\left(u_x, u_y, u_z\right)$$

d) For each level L an iterative vector v is initialized: $\vec{v}^0 = \begin{bmatrix} 000 \end{bmatrix}^T$

e) then for k=1 to a maximum count K or until a minimum displacement of $\vec{\eta}^k$ the following volume difference is calculated:

$$\delta I_k\left(u_x, u_y, u_z\right) = I^L\left(u_x, u_y, u_z\right) - J^L\left(u_x + g_x^L + v_x^{k-1}, u_y + g_y^L + v_y^{k-1}, u_z + g_z^L + v_z^{k-1}\right)$$

a mismatch vector is calculated according to the following equation:

$$\vec{b}_k = \sum_{x=u_x-\omega}^{u_x+\varpi} \sum_{y=u_y-\omega}^{u_y+\omega} \sum_{z=u_z-\omega}^{u_z+\omega} \delta I_k\left(u_x, u_y, u_z\right) \cdot \begin{pmatrix} I_x\left(u_x, u_y, u_z\right) \\ I_y\left(u_x, u_y, u_z\right) \\ I_z\left(u_x, u_y, u_z\right) \end{pmatrix}$$

the optical flow vector is then defined by

$$\vec{\eta}^k = G^{-1}\vec{b}_k$$

an iterative movement vector can be computed using the above defined optical flow vector as:

$$\vec{v}^k = \vec{v}^{k-1} + \vec{\eta}^k$$

And this is set equal to the final optical flow for level L:

$$d^L = \vec{v}^k$$

The above steps are repeated for each level until the last level L=0.
So the for the next level L-1 the global optical flow is calculated from the above computed values as:

$$g^{L-1} = \begin{bmatrix} g_x^{L-1} g_y^{L-1} g_z^{L-1} \end{bmatrix} = 2\left(g^L + d^L\right)$$

f) The final optical flow vector is then

$$d = g^0 + d^0$$

g) Now the coordinates of a point v in volume J corresponding to the point U in volume I can be computed as:

$$v=u+d$$

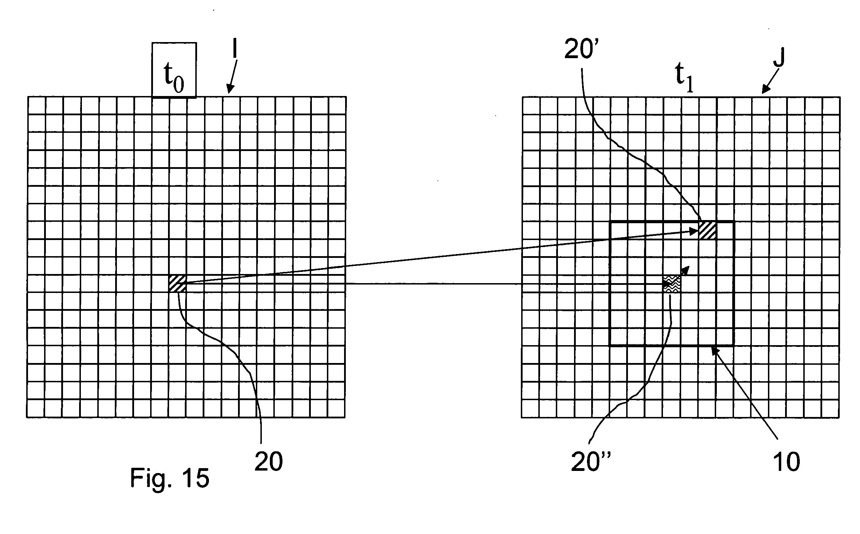

Figures 15 to 18 try to give a graphical and schematic idea of the effects of the above mentioned tracking method which is obviously a simplified representation of reality.

In figures 15 to 18 the two images I and J taken at different time T0 and T1 are represented as a 2-dimensional array of pixels as in the example of figures 11 to 14.

A pixel 20 corresponding to a feature to be tracked and selected according to the above disclosed method is indicated in the 2-dimensional pixel array of image I. In Image J at the same position pixel 20'' would correspond to the pixel 20 in absence of movements of the imaged object, in this case the breasts. A certain pixel neighbourhood of pixels of the pixel 20'' is indicated by the grey shaded square corresponding to a 7x7 pixel array centred at the position of pixel 20'' and which neighbourhood is indicated by number 10.

With 20' is indicated the new position of the feature 20 of image I. This means that breast tissue at position of pixel 20 has moved to position of pixel 20' over the time. Obviously the said pixel 20' is illustrated only for sake of explaining the way the tracking is carried out. In the real case this pixel is not known otherwise tracking would not be necessary.

The general method of tracking the pixels corresponding to selected features already described above by means of the mathematical formalism is described hereinafter by means of the practical example given in the drawings and limited to the two dimensional case for sake of simplicity. However a skilled person bearing in mind the general mathematical description of tracking can nevertheless understand and appreciate the way tracking occurs in a three dimensional case.

At the beginning of the tracking it is assumed that pixel 20 in image I has the same position namely the one of pixel 20'' in image J. This pixel 20'' is called hereinafter the tracked pixel, while the pixel 20 of image I selected as a feature will be called the feature pixel. Applying the algorithm first the inverse gradient matrix of a certain region, corresponding to a neighbourhood of the tracked pixel 20'' and which in the case of the present example is the said 7x7 array of pixels (this value is adjustable) centred at pixel 20'' in image J is calculated. This neighbourhood corresponds to the so called tracking region. By applying the pyramidal implementation of Lucas and Kanade's feature tracking algorithm, that has been adapted to work on three dimensional image volumes and is explained in detail later the new position of a tracked feature on image J can be found.

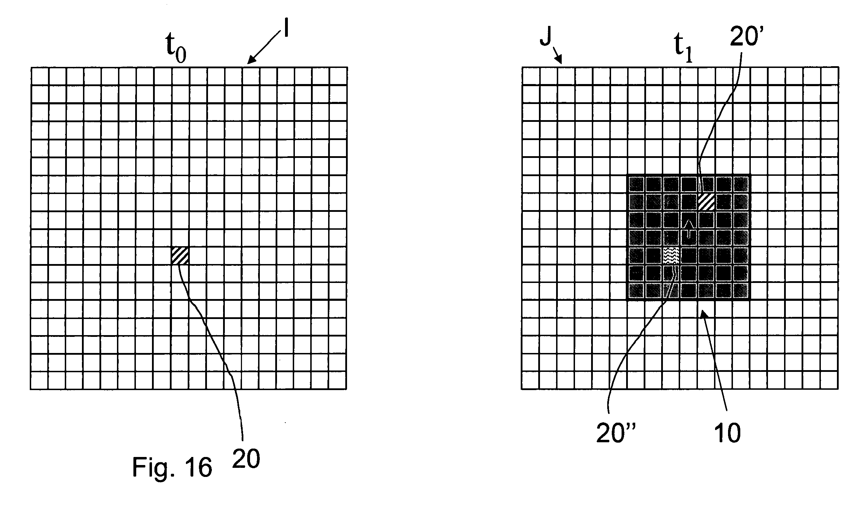

The new position of the tracked feature at 20' in image J determines the optical flow vector. This is defined calculated in the first iterative step. As it appears form a comparison of figures 15 and 16 the tracking region has shifted in such a way as to bring the centre of the tracking region closer to the new position of the same tissue area 20'.

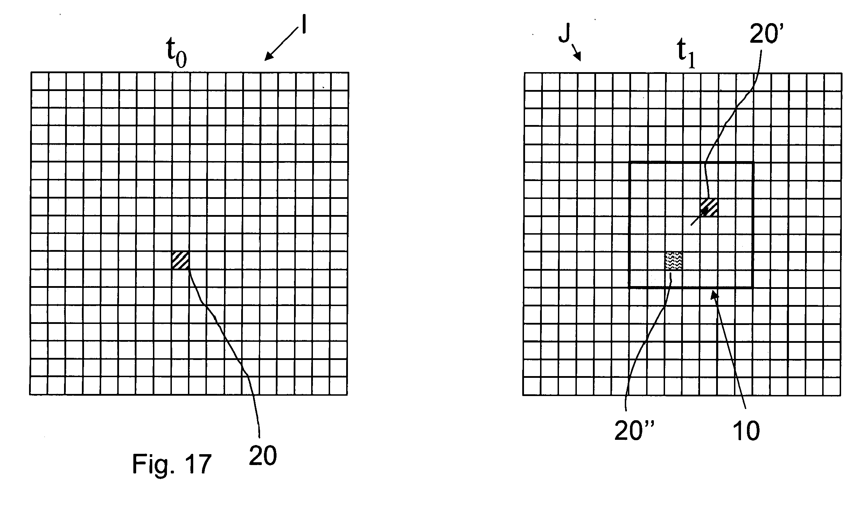

The tracking is further iteratively applied by repeating the calculation of the mismatch vector between the pixel 20 representing the feature in image I and the new identified position of the centre of the tracking region in image J. This leads to the definition of a new optical flow vector and to a new shift of the pixel neighbourhood or tracking region as illustrated in figure 17.

The steps of determining the mismatch vector between the feature pixel 20 in image I and the centre of the tracking region is performed until the mismatch vector reached an adjustable minimum.

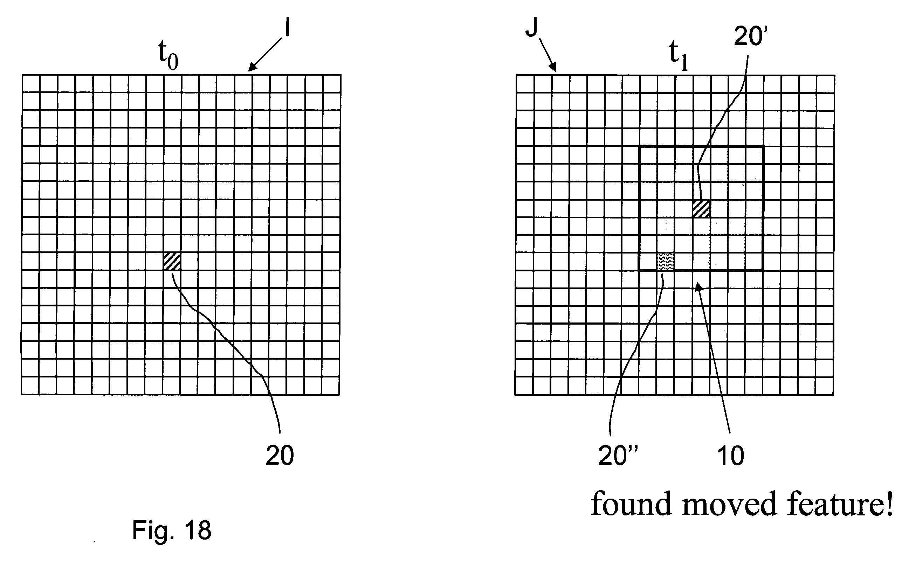

This situation is illustrated in figure 18. Relating to the graphic representation of figure 15 to 17 the pixel 20' is maintained at his position in order to highlight the fact that the tracking region is shifted so that it is finally centered around the correct new position 20' representing the same part of the breast as pixel 20 in image I.

The above example is carried out only with one feature represented by a pixel. The above steps have to be carried out for each feature selected in the image.

After all features have been tracked to it's new positions a certain amount of optical flow vectors at different positions all over the image / volume, but only within the regions representing breast tissue, exist. The greatest advance in comparison to other registration algorithms belongs to the fact, that said algorithm has spread out the optical flow vectors all over the image / volume.

Morphing is then carried out by applying the inverse optical flow vector to each feature and it's surrounding neighbourhood to image / volume J. This results in a new virtual image / volume of images J'.

Figure 19 illustrates the effect of the said method to real diagnostic images. The first set of images on the left shows a representative slice out of an breast exam at timecode t0 without contrast agent administered. The second image on the left was acquired at the same slice position at timecode t1 after contrast agent administration. The third image on the left visualizes the result of a pixel by pixel subtraction of each pixel's signal intensity at timecode t1 minus at timecode t0, the so called subtraction image. In absence of relative movements of the breasts during the time interval t1-t0, the resulting image would contain wide parts of pixels with signal intensity of zero appearing black where no contrast agent enhanced has occurred. Movement during the interval t1-t0 has the effect that artefacts are generated by pixels at the same position of image /volume I and J do not correspond to the same region of the tissue imaged. In this example the subtraction image shows one breast containing a contrast enhancing tumor, indicated with a small arrow. Most kinds of malignant and benign tumours of the breast show an additional contrast agent uptake caused by increased vascularisation. The additional white structures at the top of both breasts belong to movement artefacts. The remaining white structure in the centre of both breasts result of a weak contrast agent uptake of the normal breast parenchyma in combination with movement.

The right side of figure 19 shows the corresponding images with said registration algorithm applied:

The image at timecode t0 is not altered by the algorithm and therefore remains the same. But after three dimensional feature tracking a new virtual image volume was calculated. The second images on the right at timecode t1' shows the corresponding virtual image of the same slice position after registration was applied. The last image on the right side visualizes the result of a pixel by pixel subtraction of each pixel's signal intensity at timecode tl' minus at timecode t0, the new (virtual) subtraction image. One breast still shows the contrast enhancing tumor, indicated with a small arrow. Areas within the breast representing normal breast parenchyma still show some moderate contrast agent uptake appearing a bit less bright because of reduced motion artefacts. Wide parts of white structures at the top of both breasts have disappeared because of movement artefact compensation.

Example of figure 19 is a simplified since only a sequence of two images is considered one taken before and one after contrast agent is administered.

In reality a series of cross-sectional images (e.g. more tan 50) can be acquired at regular time intervals before and after injection of the contrast media and subtraction images can be calculated between each couple of subsequent images.

In addition to acquiring more than one cross sectional image within a series also more than two series (e.g. 5 or even more) could be acquired one after another. This leads to several subtraction images / volumes. Of course the disclosed algorithm could be applied to all combination of series, equal whether they have been acquired before or after contrast agent movement, to reduce any movement that happened between.

The above describe method according to the present invention can be carried out by means of an algorithm coded as a program which can be executed by a computer.

The program can be saved on a portable or on a static memory device such as a magnetic, optomagnetic or optical substrate as one or more floppy disks, one or more Magneto-optical disks, one or more CD-ROM or DVD-ROM or alternatively also on portable or stable hard disks. Alternatively the program can also be saved on solid state electronic devices such as pen drives or similar.

**Claims**

**1.** A method of registering biomedical images to reduce imaging artefacts caused by object movement which comprises the following steps:

a) Providing at least a first and a second digital or digitalized image or set of cross-sectional images of the same object, the said images being formed by a two or three dimensional array of pixels or voxels;
b) Defining within the first image or set of images a certain number of landmarks, so called features by selecting a certain number of pixels or voxels which are set as landmarks or features and generating a list of said features to be tracked;
c) Tracking the position of each pixel or voxel selected as a feature from the first to the second image or set of images by determining the optical flow vector from the first to the second image or set of images for each pixel or voxel selected as a feature;
d) Registering the first and the second image or set of images by applying the inverse optical flow to the pixels or voxels of the second image or set of images.

**Characterised in that**
an automatic trackable landmark selection step is carried out consisting in:

B1) defining a pixel or voxel neighbourhood around each pixel or voxel of the first image or first set of cross-sectional images, the said pixel or voxel neighbourhood comprising a limited number of pixels or voxels;
B2) for each target pixel or voxel determining one or more characteristic parameters which are calculated as a function of the numeric appearance parameters describing the appearance of the said target pixel or voxel and of each or a part of the pixels or voxels of the said pixel or voxel window and as a function of one or more characteristic parameters of either the numerical matrix or of a transformation of the said numerical matrix representing the pixels or voxels of the said window;
B3) determining the pixels or voxels consisting in validly trackable landmark or feature as a function of the said characteristic parameters of the target pixels or voxels.

2. A method according to claim 1, **characterised in that** the function for determining if the target pixels or voxels are valid landmarks or features to be tracked consist in the comparison of the values of each one or of a combination of the said characteristic parameters of the target pixel or voxel with a threshold value.

3. A method according to claim 2, **characterised in that** a threshold for each characteristic parameter is determined and the comparison of each characteristic parameter with the corresponding threshold is carried out, the quality of validly trackable or non validly trackable landmark being determined from a global evaluation parameter consisting in a function of the single comparison results.

4. A method according to claim 3, **characterised in that** a global threshold is determined as a function of the thresholds for each characteristic parameter and the quality of validly trackable and non validly trackable landmark is determined by comparing the global evaluation parameter with the global threshold.

5. A method according to claim 3 or 4, **characterised** that a validity variable is defined for describing by a numeric value the result of each comparison relatively to the quality of validly trackable and non validly trackable landmark; a global evaluation parameter being determined as a function of the values of the validity variable of each comparison between a part or each characteristic feature and the corresponding threshold; the quality of validly trackable and non validly trackable landmark being determined by a function of the global evaluation parameter.

6. A method according to claim 5, **characterised in that** the function for determining the quality of validly trackable and non validly trackable landmark from the global evaluation parameter is a comparison between the said global evaluation parameter and a global threshold.

7. A method according to one or more of the preceding claims in which the set of characteristic parameters is subdivided in a certain number of subsets of characteristic parameters and for each subset a secondary characteristic parameter is determined as a function of the characteristic parameter of the said subset; a threshold being defined for each of the secondary characteristic parameter and for each secondary characteristic parameter the quality of validly trackable and non validly trackable landmark being determined by a function of the said secondary characteristic parameter and the corresponding threshold.

8. A method according to claim 7, **characterised in that** the threshold corresponding to each of the secondary characteristic parameters is determined as a function of the thresholds of the characteristic parameters of the corresponding subset of characteristic parameters.

9. A method according to claims 7 or 8, **characterised in that** the characteristics parameters of a subset have at least a common feature, and particularly consist in the numeric appearance parameters describing the appearance of the said target pixel or voxel and of each or a part of the pixels or voxels of the said pixel or voxel window or are determined by the same function of one or more characteristic parameters of either the numerical matrix or of the same transformation of the said numerical matrix representing the pixels or voxels of the said window;

10. A method according to one or more of the preceding claims 7 to 10, **characterised in that** a global evaluation parameter is defined as a function of the secondary characteristic parameters and the quality of validly trackable and non validly trackable landmark is determined by a function of the said global evaluation parameter and a global threshold consisting in a function of the thresholds for the secondary characteristic parameters.

11. A method according to one or more of the preceding claims 2 to 10, **characterised in that** each characteristic parameter and/or each secondary characteristic parameter and/or each global threshold is weighted, the weights being determined according to the relevance of the characteristic parameter or of the secondary characteristic parameter for the determination of the quality of validly trackable and non validly trackable landmark.

12. A method according to one or more of the preceding claims **characterised in that** the functions for determining the global evaluation parameter and/or the secondary characteristic parameters and/or the global thresholds consist in linear combinations absolute value functions, summation of the square values or non linear functions by which the characteristic parameters or the secondary parameters or the thresholds are processed.

13. A method according to claim 12, **characterised in that** the functions for determining the global evaluation parameter and/or the secondary characteristic parameters and/or the global thresholds provides further for weighting of each of the characteristic parameters or the secondary parameters or the thresholds are processed.

14. A method according to claim 1, **characterised in that** the quality of validly trackable and non validly trackable landmark of a target pixel or voxel is determined by processing the characteristic parameters of each pixel or voxel of the image with a classification algorithm.

15. A method according to claim 14, **characterised in that** each target pixel id coded for processing by a vector, the components of the vector consisting in one or more characteristic parameter of the said pixel or voxel.

16. A method according to claims 14 or 15, **characterised in that** instead of the characteristic parameter, secondary characteristic parameters are processed by the classification algorithm, the said secondary characteristic parameters being determined as a function of a subset of characteristic parameters, the set of characteristic parameters being subdivided in a certain number of subsets.

17. A method according to claims 14 or 15, **characterised in that** the components of the input vector processed by the classification algorithm for each pixel or voxel consist in the validity variable numerically describing the result of the comparison of each of the characteristic parameter with the corresponding threshold or of each of the secondary characteristic parameter with a corresponding threshold.

18. A method according to one or more of the preceding claims 14 to 17, **characterised in that** the classification algorithm is a clustering algorithm or a predictive algorithm.

19. A method according to claim 18, **characterised in that** the classification algorithm is an artificial neural network.

20. A method according to one or more of the preceding claims 14 to 19, **characterised by** the following steps:

   providing a certain number of images of known cases in which a certain number of valid landmarks has been identified as validly trackable landmarks or features;
   Determining the set of characteristic parameters for the pixels or voxels corresponding to the said landmarks identified validly trackable in the certain number of images by applying the automatic trackable landmark selection step consisting in the steps B1) and B2) disclosed above;
   Generating a vector univoquely associated to each landmark identified as validly trackable and comprising as components the said characteristic parameters of the pixels or voxels coinciding with the validly trackable landmarks;
   Describing the quality of validly trackable landmark by means of a predetermined numerical value of a variable and associating the said numerical value to the vector coding each pixel or voxel coinciding with a validly trackable landmark;
   Each vector coding each pixel or voxel coinciding with a validly trackable landmark forming a record of a training database for a classification algorithm;
   Training a classification algorithm by means of the said database;
   Determining the quality of validly trackable landmark of a target pixel or voxel by furnishing to the input of the trained classification algorithm the vector comprising the characteristic parameters of the said target pixel or voxel.

21. A method according to claim 20, **characterised in that** the training database comprises also the characteristic parameters organized in vector form of pixels or voxels of the images of known cases coinciding with landmarks of which it is known not be validly trackable ones and describing the quality of non validly trackable landmark by means of a predetermined numerical value of a variable which is different form the value of the said variable describing the quality of validly trackable landmarks while the said numerical value describing the quality of non validly trackable landmarks is added to the vector coding each pixel or voxel coinciding with one of the said known non validly trackable landmarks.

22. A method according to one or more of the preceding claims, **characterised in that** the pixels or voxels of an image are processed previously or in parallel by means of the so called Lucas & Kanade automatic feature tracking method or algorithm.

**23.** A method according to claim 22, **characterized in that** the the Lucas & Kanade algorithm comprises the following steps:

a) providing a first 3-dimensional image volume I formed by a 3-dimensional array of voxels;
b) defining a voxel neighbourhood for each target voxel, which neighbourhood surrounds the said target voxel and has an adjustable size of e.g. a 3x3x3 array of voxels centered at the said target voxel;
c) defining a Cartesian coordinate system and calculating relatively to each axis of the said Cartesian coordinate system a so called gradient volume which is formed by the intensity gradients of each voxel of the first image volume relatively to its neighbourhood voxels, the said gradient volumes being defined by:

a) gradient volume in x direction:

$$I_{\Delta x}(x, y, z) = \frac{I(x+1, y, z) - I(x-1, y, z)}{2}$$

b) gradient volume in y direction:

$$I_{\Delta y}(x, y, z) = \frac{I(x, y+1, z) - I(x, y-1, z)}{2}$$

c) gradient volume in z direction

$$I_{\Delta z}(x, y, z) = \frac{I(x, y, z+1) - I(x, y, z-1)}{2}$$

d) calculate a so called gradient matrix for each target voxel, the said gradient matrix being defined by:

$$G = \begin{bmatrix} m_{200} & m_{110} & m_{101} \\ m_{110} & m_{020} & m_{011} \\ m_{101} & m_{011} & m_{002} \end{bmatrix}$$

with

$$m_{200} = I_{\Delta x}^2(x, y, z) \; ; \quad m_{020} = I_{\Delta y}^2(x, y, z) \; ; \quad m_{002} = I_{\Delta z}^2(x, y, z)$$

$$m_{110} = I_{\Delta x}(x, y, z) \cdot I_{\Delta y}(x, y, z) \; ;$$

$$m_{101} = I_{\Delta x}(x, y, z) \cdot I_{\Delta z}(x, y, z) \; ;$$

$$m_{011} = I_{\Delta y}(x, y, z) \cdot I_{\Delta z}(x, y, z)$$

e) For each gradient matrix of each target voxel of the 3-dimensional image volume calculate the minimum eigenvalue λm by applying the following equations:

Define

$$c = m_{200} \cdot m_{020} \; ; \quad d = m_{011}^2 \; ; \quad e = m_{110} \cdot m_{101} \; ; \quad f = m_{101} \cdot m_{101}$$

$$p = -m_{200} - m_{020} - m_{002}$$

$$q = c + (m_{200} + m_{020})m_{002} - d - e - f$$

$$r = (e - c)m_{002} + d \cdot m_{200} - 2(m_{110} \cdot m_{011} \cdot m_{101}) + f \cdot m_{020}$$

$$a = q - \frac{p^2}{3} \; ; \quad b = \frac{2p^3}{27} - \frac{pq}{3} + r$$

and with $\left| 3\dfrac{b}{an} \right| \le 1 \wedge a \le 0$ because G is a matrix of central

calculate the minimum eigenvalue of the gradient matrix as:

$$\lambda_1 = n \cdot \cos\theta - \frac{p}{3}$$

$$\lambda_2 = n \left[ \frac{\cos\theta + \sqrt{3}\sin\theta}{2} \right] - \frac{p}{3}$$

$$\lambda_3 = n \left[ \frac{\cos\theta + \sqrt{3}\sin\theta}{2} \right] - \frac{p}{3}$$

$$\lambda_m = \min(\lambda_1, \lambda_2, \lambda_3)$$

f) define a threshold for the minimum eigenvalue λm;

g) select each voxel as a feature to be tracked in image I for which the corresponding gradient matrix has a minimum eigenvalue λm satisfying the following criteria:

i) λm is bigger than the threshold;

ii) λm is not smaller than a percentage of the maximum of all minimum values λm of the eigenvalues;

iii) If another voxel selected as a feature exists in a defined voxel neighbourhood around the target voxel also maintained as a selected feature only the one of the voxels whose gradient matrix has the bigger minimum value λm of the eigenvalue is selected as a feature, the other one is discarded from the list of trackable features;

iv) the mean signal intensity value of a 3d-neighbourhood around the voxel selected as feature is bigger than an adjustable mean signal intensity value threshold;

24. A method according to claim 23, **characterised in that** the threshold for the mean signal intensity of the neighbourhood of a voxel selected as a feature is set about 10.

25. A method according to one or more of the preceding claims **characterised in that** the characteristic parameters consist in the intensity values of the pixels or voxels of the selected windows and in the intensity values of the target pixel or voxel.

26. A method according to one or more of the preceding claims, **characterised in that** the characteristic parameters consist alternatively or in addition in the singular values of the numerical matrix comprising the image data of the pixels or voxels of the selected window.

27. A method according to one or more of the preceding claims, **characterised in that** the characteristic parameters consist, alternatively or in addition, in the eigenvalues of the gradient matrix of the said numerical matrix representing the pixels or voxels of the said window.

28. A method according to one or more of the preceding claims, **characterised in that** the characteristic parameters consist, alternatively or in addition, in the eigenvalues of the Hessian matrix of the said numerical matrix representing the pixels or voxels of the said window.

29. A method according to one or more of the preceding claims, **characterised in that** the characteristic parameters consist, alternatively or in addition, in one or more or a combination of the coefficients of the wavelet transform of the said numerical matrix representing the pixels or voxels of the said window obtained by processing of the said matrix with one or more different wavelet basis functions.

30. A method according to one or more of the preceding claims, **characterised in that** the characteristic parameters consist, alternatively or in addition, in the so called co-occurrence transform of the matrix.

31. A method according to one or more of the preceding claims, **characterised in that** the characteristic parameters consist, alternatively or in addition, in one or more of the coefficients of the autocorrelation transform of the said numerical matrix representing the pixels or voxels of the said window.

32. A method according to one or more of the preceding claims, **characterised in that** the characteristic parameters consist in a a combination of eigenvalues or singular values of the matrix of the numerical values representing the pixels or voxels of the windows and/or of the eigenvalues of the gradient matrix or of the Hessian matrix of the said numerical matrix representing the pixels or voxels of the said window and/or of one or more of the coefficients of the wavelet transform and/or one or more of the coefficients of the autocorrelation transform and/or of the singular values of the co occurrence matrix of said numerical matrix representing the pixels or voxels of the said window.

33. A method according to one or more of the preceding claims, **characterised in that**
at leas two or more images of the same object are acquired or are provided which at least two or more images are acquired at different time instants;

for each voxel being individuated as coinciding with a validly trackable landmark in a first image volume I the said feature is tracked relatively to its position in the voxel array of a further image J of the same object taken at a second later time, the said tracking being carried out by means of a so called pyramidal implementation of the Lucas and Kanade feature tracker.

**34.** A method according to claim 33, **characterised in that** the so called Pyramidal implementation of the Lucas and Kanade feature tracker comprises the following steps:

Defining a point u as a point in image volume I *corresponding* to *the 3-dimensional array* of *voxels* of image I and v the corresponding point in image volume *J, corresponding to the 3-dimensional array of voxels* of *image* J, this points having the coordinates of a voxel selected as a feature in image I;

- Building two ideal pyramids of the image volumes *I* and *J* with $I^L$ and $J^L$ representing the volume at level *L* 0,..., m with the basement (*L=0*) representing the original volume;
- the volume of each following floor is reduced in size by combining a certain amount of pixels in direct neighborhood to one mean value;
- defining a so called global pyramidal movement vector g which is initialized on the highest floor $L_m$:

$$ g^{L_m} = \left[ g_x^{L_m}\, g_y^{L_m}\, g_z^{L_m} \right]^T = \left[ 000 \right]^T $$

i) defining the position of the point u as $u^L$ and calculating the said position by the following equation where L has the value of the actual floor or level of the pyramid:

$$ u^L = \left[ p_x,\, p_y,\, p_z \right]^T = \left( \frac{u}{2^L} \right) $$

were p is the actual volume position

ii) calculating the volume gradients in each direction of the Cartesian coordinates x, y, z according to the following equations for the volume gradients:

$$ I_{\Delta x}\left(u_x, u_y, u_z\right) = \frac{I^L\left(u_x + 1, u_y, u_z\right) - I^L\left(u_x - 1, u_y, u_z\right)}{2} $$

$$ I_{\Delta y}\left(u_x, u_y, u_z\right) = \frac{I^L\left(u_x, u_y + 1, u_z\right) - I^L\left(u_x, u_y - 1, u_z\right)}{2} $$

$$ I_{\Delta z}\left(u_x, u_y, u_z\right) = \frac{I^L\left(u_x, u_y, u_z + 1\right) - I^L\left(u_x, u_y, u_z - 1\right)}{2} $$

iii) using the gradient volumes for computing the gradient matrix according to the following equation:

$$G = \sum_{x=p_x-\omega}^{p_x+\omega} \sum_{y=p_y-\omega}^{p_y+\omega} \sum_{z=p_z-\omega}^{p_z+\omega} \begin{bmatrix} m_{200} & m_{110} & m_{101} \\ m_{110} & m_{020} & m_{011} \\ m_{101} & m_{011} & m_{002} \end{bmatrix}$$

with

$$m_{200} = I_{\Delta x}^2 \left( u_x, u_y, u_z \right); \quad m_{020} = I_{\Delta y}^2 \left( u_x, u_y, u_z \right); \quad m_{002} = I_{\Delta z}^2 \left( u_x, u_y, u_z \right)$$

$$m_{110} = I_{\Delta x} \left( u_x, u_y, u_z \right) \bullet I_{\Delta y} \left( u_x, u_y, u_z \right)$$

$$m_{101} = I_{\Delta x} \left( u_x, u_y, u_z \right) \bullet I_{\Delta z} \left( u_x, u_y, u_z \right)$$

$$m_{001} = I_{\Delta y} \left( u_x, u_y, u_z \right) \bullet I_{\Delta y} \left( u_x, u_y, u_z \right)$$

and where the value ω defines the area size or the neighbourhood of voxels influencing the target voxels representing the tracked feature.

iv) initialising for each level L an iterative vector v defined by: $\vec{v}^0 = [0\,0\,0]^T$

v) for k=1 to a maximum count K or until a minimum displacement of $\vec{\eta}_k$ calculating the following volume difference:

$$\delta I_k \left( u_x, u_y, u_z \right) = I^L \left( u_x, u_y, u_z \right) - J^L \left( u_x + g_x^L + v_x^{k-1}, u_y + g_y^L + v_y^{k-1}, u_z + g_z^L + v_z^{k-1} \right)$$

vi) calculating a mismatch vector according to the following equation:

$$\vec{b}_k = \sum_{x=u_x-\omega}^{u_x+\varpi} \sum_{y=u_y-\omega}^{u_y+\omega} \sum_{z=u_z-\omega}^{u_z+\omega} \delta I_k \left( u_x, u_y, u_z \right) \cdot \begin{pmatrix} I_x \left( u_x, u_y, u_z \right) \\ I_y \left( u_x, u_y, u_z \right) \\ I_z \left( u_x, u_y, u_z \right) \end{pmatrix}$$

vii) determining an optical flow vector according to the following equation

$$\vec{\eta}^k = G^{-1} \vec{b}_k$$

where $G^{-1}$ is the inverse gradient matrix G determined at step iii)
viii) computing an iterative movement vector using the above defined optical flow vector as:

$$\vec{v}^k = \vec{v}^{k-1} + \vec{\eta}^k$$

And setting this equal to the final optical flow for level L: $d^L = \vec{v}^k$

ix) repeating the steps i) to viii) for each level until the last level L=0 reaching the final optical flow vector defined by equation:

$$d = g^0 + d^0$$

x) determining the coordinates of the point v in volume J which corresponds to the point u representing the feature to be tracked in volume by the following equation:

$$\mathbf{v=u+d}$$

xi) repeating the above method for each voxel corresponding to feature selected in image I.

**35.** A method according to claim 34, **characterised in that** registering the two images I and J is carried out by applying the inverse optical flow vector to each points v in image J identified as corresponding to a voxel representing a feature corresponding to the point U of a voxel corresponding to a selected feature in image I or applying the optical flow vector to the points u corresponding each to a voxel identified as a selected feature in image I.

**36.** A method according to one or more of the preceding claims 33 to 35, **characterised in that** it is provided in combination with a method for contrast media enhanced diagnostic imaging, particularly contrast media enhanced MRI or ultrasound imaging and which method comprises the following steps:

a) Providing at least a first and a second digital or digitalized image or set of cross-sectional images of the same object acquired by MRI or Ultrasound, the said images being formed by a two or three dimensional array of pixels or voxels, where scanning of the same tissue or tissue zone or of the same anatomical district is performed in presence of a contrast media in the said tissue or tissue zone or in the said anatomical district at a second time or at any following time;
b) Defining within the first image or set of images a certain number of landmarks, so called features by selecting a certain number of pixels or voxels which are set as landmarks or features and generating a list of said features to be tracked;
c) Tracking the position of each pixel or voxel selected as a feature from the first to the second image or set of images by determining the optical flow vector from the first to the second image or set of images for each pixel or voxel selected as a feature;
d) Registering the first and the second image or set of images by applying the inverse optical flow to the pixels or voxels of the second image or set of images.

**37.** A method according to claims 33 to 36, **characterised in that** after the feature selection step and before carrying out the feature tracking step a further automatic feature selection step is carried out consisting in:

B1) defining a pixel or voxel neighbourhood around each pixel or voxel of the first image or first set of cross-sectional images, the said pixel or voxel neighbourhood comprising a limited number of pixels or voxels; a two dimensional neighbourhood is choosen in case of a single image, a three dimensional neighbourhood is chosen in case of a set of cross-sectional images;
B2) for each pixel or voxel determining a mean signal intensity value of all pixels or voxels of the said neighbourhood of pixel or voxels;
B3) defining a mean signal intensity value threshold;
B4) comparing the mean signal intensity value determined for each pixel or voxel neighbourhood at step B2 and comparing the said mean signal intensity value with the mean signal intensity value threshold;
B5) in case of the mean signal intensity value of the said neighbourhood higher than the threshold at step B4 the pixels or voxels is defined as a feature to be tracked and is added to a list of features to be tracked.

Fig. 1

Fig. 2

- # IMAGE REGISTRATION
  ## 1. search landmarks

  ## 2. track landmarks

  ## 3. morph images

t0    t1

t0 → t1

Fig. 3

## Image 10x10 pixels

| | | | | | | | | | |
|---|---|---|---|---|---|---|---|---|---|
| P(1,1) | P(1,2) | P(1,3) | P(1,4) | P(1,5) | P(1,6) | P(1,7) | P(1,8) | P(1,9) | P(1,10) |
| P(2,1) | P(2,2) | P(2,3) | P(2,4) | P(2,5) | P(2,6) | P(2,7) | P(2,8) | P(2,9) | P(2,10) |
| P(3,1) | P(3,2) | P(3,3) | P(3,4) | P(3,5) | P(3,6) | P(3,7) | P(3,8) | P(3,9) | P(3,10) |
| P(4,1) | P(4,2) | P(4,3) | P(4,4) | P(4,5) | P(4,6) | P(4,7) | P(4,8) | P(4,9) | P(4,10) |
| P(5,1) | P(5,2) | P(5,3) | P(5,4) | P(5,5) | P(5,6) | P(5,7) | P(5,8) | P(5,9) | P(5,10) |
| P(6,1) | P(6,2) | P(6,3) | P(6,4) | P(6,5) | P(6,6) | P(6,7) | P(6,8) | P(6,9) | P(6,10) |
| P(7,1) | P(7,2) | P(7,3) | P(7,4) | P(7,5) | P(7,6) | P(7,7) | P(7,8) | P(7,9) | P(7,10) |
| P(8,1) | P(8,2) | P(8,3) | P(8,4) | P(8,5) | P(8,6) | P(8,7) | P(8,8) | P(8,9) | P(8,10) |
| P(9,1) | P(9,2) | P(9,3) | P(9,4) | P(9,5) | P(9,6) | P(9,7) | P(9,8) | P(9,9) | P(9,10) |
| P(10,1) | P(10,2) | P(10,3) | P(10,4) | P(10,5) | P(10,6) | P(10,7) | P(10,8) | P(10,9) | P(10,10) |

## Fig. 4

Matrix of the Intensity Values of the Pixels of the
Immagin 10x10 pixels  Fig. 5

| I(1,1) | I(1,2) | I(1,3) | I(1,4) | I(1,5) | I(1,6) | I(1,7) | I(1,8) | I(1,9) | I(1,10) |
|--------|--------|--------|--------|--------|--------|--------|--------|--------|---------|
| I(2,1) | I(2,2) | I(2,3) | I(2,4) | I(2,5) | I(2,6) | I(2,7) | I(2,8) | I(2,9) | I(2,10) |
| I(3,1) | I(3,2) | I(3,3) | I(3,4) | I(3,5) | I(3,6) | I(3,7) | I(3,8) | I(3,9) | I(3,10) |
| I(4,1) | I(4,2) | I(4,3) | I(4,4) | I(4,5) | I(4,6) | I(4,7) | I(4,8) | I(4,9) | I(4,10) |
| I(5,1) | I(5,2) | I(5,3) | I(5,4) | I(5,5) | I(5,6) | I(5,7) | I(5,8) | I(5,9) | I(5,10) |
| I(6,1) | I(6,2) | I(6,3) | I(6,4) | I(6,5) | I(6,6) | I(6,7) | I(6,8) | I(6,9) | I(6,10) |
| I(7,1) | I(7,2) | I(7,3) | I(7,4) | I(7,5) | I(7,6) | I(7,7) | I(7,8) | I(7,9) | I(7,10) |
| I(8,1) | I(8,2) | I(8,3) | I(8,4) | I(8,5) | I(8,6) | I(8,7) | I(8,8) | I(8,9) | I(8,10) |
| I(9,1) | I(9,2) | I(9,3) | I(9,4) | I(9,5) | I(9,6) | I(9,7) | I(9,8) | I(9,9) | I(9,10) |
| I(10,1) | I(10,2) | I(10,3) | I(10,4) | I(10,5) | I(10,6) | I(10,7) | I(10,8) | I(10,9) | I(10,10) |

$\vec{V} =$  Vector coding Pixel P(2,2)

| I(1,1) | I(1,2) | I(1,3) | I(2,1) | I(2,2) | I(2,3) | I(3,1) | I(3,2) | I(3,3) |
|--------|--------|--------|--------|--------|--------|--------|--------|--------|

Fig. 6

$\vec{V} =$  Pixel vector coding

| I(m-1,n-1) | I(m-1,n) | I(m-1,n+1) | I(m+1,n) | I(m,n) | I(m,n+1) | I(m+1,n-1) | I(m+1,n) | I(m+1,n+1) |
|------------|----------|------------|----------|--------|----------|------------|----------|------------|

Fig. 7

## WINDOW CENTERED AT I(m,n)

| I(m-1,n-1) | I(m-1,n) | I(m-1,n+1) |
|---|---|---|
| I(m,n-1) | I(m,n) | I(m,n+1) |
| I(m+1,n-1) | I(m+1,n) | I(m+1,n+1) |

**y** ↑    **x** →

## GRADIENT MATRIX

| $\displaystyle\sum_{p\in\{pixel\in Neighborhood\}}(\partial x)^2{}_p$ | $\displaystyle\sum_{p\in\{pixel\in Neighborhood\}}(\partial x)_p(\partial y)_p$ |
|---|---|
| $\displaystyle\sum_{p\in\{pixel\in Neighborhood\}}(\partial x)_p(\partial y)_p$ | $\displaystyle\sum_{p\in\{pixel\in Neighborhood\}}(\partial y)^2{}_p$ |

$$(\partial x)_P = \frac{\left(I_{(i,j+1)} - I_{(i,j-1)}\right)}{2}, \qquad P \equiv (i,j)$$

$$(\partial y)_P = \frac{\left(I_{(i+1,j)} - I_{(i-1,j)}\right)}{2}, \qquad P \equiv (i,j)$$

Fig. 8

## HESSIAN MATRIX

$$\left(\partial^2_{x^2}\right)_p \qquad \left(\partial^2_{xy}\right)_p$$

$$\left(\partial^2_{xy}\right)_p \qquad \left(\partial^2_{y^2}\right)_p$$

$$\left(\partial^2_{x^2}\right)_p = \left(I_{(i,j+1)} + I_{(i,j-1)}\right) - 2 \cdot I_{(i,j)}, \qquad P \equiv (i,j)$$

$$\left(\partial^2_{y^2}\right)_p = \left(I_{(i+1,j)} + I_{(i-1,j)}\right) - 2 \cdot I_{(i,j)}, \qquad P \equiv (i,j)$$

$$\left(\partial^2_{xy}\right)_p = I_{(i+1,j+1)} + I_{(i-1,j-1)} - I_{(i-1,j+1)} - I_{(i+1,j-1)}, \qquad P \equiv (i,j)$$

Fig. 9

## CODING ACCORDING TO THE INVENTION

$$\vec{V} = \left[ \begin{array}{c|c|c} \sigma_i \text{ OF MATRIX OF INTENSITY VALUES OF THE PIXELS OF THE WINDOW} & \lambda_p \text{ OF GRADIENT MATRIX} & \lambda_p \text{ OF HESSIAN MATRIX} \end{array} \right]$$

Fig. 10

37

Fig. 11

Landmarks:
- ▨ very good — 102
- ▩ good — 202
- ◼ intermediate — 302
- ■ poor — 402

characteristics

Fig. 12

Landmarks:
- very good — 102
- good — 202
- intermediate — 302
- poor characteristics — 402

Fig. 13

Fig. 14

Fig. 15

Fig. 16

Fig. 17

$t_0$

I

20

Fig. 18

J

$t_1$

20'

20''

10

found moved feature!

EP 1 780 672 A1

Fig. 19

SET OF PRIMARY CHARACTERISTIC PARAMETERS OF THE TARGET PIXEL I(m,n)

| I(m-1,n-1) | I(m-1,n) | I(m-1,n+1) | I(m+1,n) | I(m,n) | I(m,n+1) | I(m+1,n-1) | I(m+1,n) | I(m+1,n+1) | $\sigma_i$ OF MATRIX OF INTENSITY VALUES OF THE PIXELS OF THE WINDOW | $\lambda_P$ OF GRADIENT MATRIX | $\lambda_P$ OF HESSIAN MATRIX |
|---|---|---|---|---|---|---|---|---|---|---|---|

Function 1      Function 1      Function 1      Function 1

P1      P2      P3      P4

SET OF SECONDARY CHARACTERISTIC
PARAMETERS OF THE TARGET PIXEL I(m,n)

| P1 | P2 | P3 | P4 |
|---|---|---|---|

Function 2

| Global Threshold | → | COMPARISON FUNCTION | ← | GLOBAL SECONDARY CHARACTERISTIC PARAMETER |

Fig. 20

| Target pixel I(m,n) evalution result | ⇒ | VALIDLY TRACKABLE LANDMARK<br>NON VALIDLY TRACKABLE LANDMARK |

EP 1 780 672 A1

```
┌─────────────────────────────┐
│ Database of landmarks Li    │
│ known as validly and non    │
│ validly trackable landmarks │
├─────────────────────────────┤
│ L1; V1; VALIDITY1           │          ┌──────────────────┐
├─────────────────────────────┤          │ TRAINING OF      │
│ L2; V2; VALIDITY2           │─────────▶│ CLASSIFICATION   │
├─────────────────────────────┤          │ ALGORTHM         │
│ L3; V3; VALIDITY3           │          └──────────────────┘
├─────────────────────────────┤                   │
│ Ln-1; Vn-1; VALIDITYn-1     │                   │
├─────────────────────────────┤                   │
│ Ln; Vn; VALIDITYn           │                   │
└─────────────────────────────┘                   ▼
┌─────────────────────────────┐          ┌──────────────────┐
│ Input vector of             │          │ TRAINED          │
│ characteristic parameters   │─────────▶│ CLASSIFICATION   │
│ of pixel I(m,n)             │          │ ALGORTHM         │
└─────────────────────────────┘          └──────────────────┘
                                                   │
                                                   ▼
                                          ┌──────────────────────┐
                                          │ Classification output│
                                          └──────────────────────┘
                                                   │
                                                   ▼
                                          ┌──────────────────────────────┐
                                          │ VALIDLY TRACKABLE LANDMARK   │
                                          │ NON VALIDLY TRACKABLE        │
                                          │ LANDMARK                     │
                                          └──────────────────────────────┘
```

Fig. 21

EP 1 780 672 A1

## EUROPEAN SEARCH REPORT

**European Patent Office**

Application Number

EP 05 42 5750

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 839 440 A (LIOU ET AL) 24 November 1998 (1998-11-24) * abstract * * figure 1 * * column 1, line 5 - column 2, line 50 * * column 4, lines 11-36 * * column 6, line 9 - column 7, line 25 * ----- | 1-37 | INV. G06T7/00 |
| X | BENTOUTOU Y ET AL: "An invariant approach for image registration in digital subtraction angiography" PATTERN RECOGNITION, ELSEVIER, KIDLINGTON, GB, vol. 35, no. 12, December 2002 (2002-12), pages 2853-2865, XP004379654 ISSN: 0031-3203 * page 2853, left-hand column, line 1 - page 2855, right-hand column, line 1 * ----- | 1-37 | |
| Y | KUMAR R ET AL: "DETECTING LESIONS IN MAGNETIC RESONANCE BREAST SCANS" PROCEEDINGS OF THE SPIE, SPIE, BELLINGHAM, VA, US, vol. 2645, 1996, pages 181-190, XP000965356 ISSN: 0277-786X * the whole document * ----- -/-- | 1-37 | TECHNICAL FIELDS SEARCHED (IPC) G06T |

The present search report has been drawn up for all claims

| Place of search | Date of completion of the search | Examiner |
|---|---|---|
| The Hague | 15 June 2006 | Almeida Garcia, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

49

**European Patent Office**

**EUROPEAN SEARCH REPORT**

Application Number

EP 05 42 5750

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | NEUMANN U ET AL: "INTEGRATION OF REGION TRACKING AND OPTICAL FLOW FOR IMAGE MOTION ESTIMATION" PROCEEDINGS OF THE 1998 INTERNATIONAL CONFERENCE ON IMAGE PROCESSING. ICIP '98. CHICAGO, IL, OCT. 4 - 7, 1998, INTERNATIONAL CONFERENCE ON IMAGE PROCESSING, LOS ALAMITOS, CA : IEEE COMPUTER SOC, US, vol. 3 CONF. 5, 4 October 1998 (1998-10-04), pages 658-662, XP001044480 ISBN: 0-8186-8822-X * abstract * Section 3 "Feature selection and evaluation" and subsections ----- | 1-37 | |
| A | LUCHT R ET AL: "Elastic matching of dynamic MR mammographic images" MAGNETIC RESONANCE IN MEDICINE WILEY USA, vol. 43, no. 1, January 2000 (2000-01), pages 9-16, XP002385544 ISSN: 0740-3194 * page 9, left-hand column, line 1 - page 11, left-hand column, line 15 * ----- | 1-37 | TECHNICAL FIELDS SEARCHED (IPC) |
| A | ANONYMOUS: "NLM Insight Segmentation & Registration Toolkit" INTERNET ARTICLE, [Online] 19 August 2003 (2003-08-19), XP002385543 Retrieved from the Internet: URL:http://web.archive.org/web/20030819092 534/http://itk.org/HTML/Curve2DExtraction. htm> [retrieved on 2003-08-19] * the whole document * ----- | 23,37 | |

-/--

The present search report has been drawn up for all claims

| Place of search | Date of completion of the search | Examiner |
|---|---|---|
| The Hague | 15 June 2006 | Almeida Garcia, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

# EUROPEAN SEARCH REPORT

Application Number

EP 05 42 5750

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MEUNIER J ET AL: "AUTOMATIC 3D REGISTRATION OF BRAIN SPECT IMAGES" COMPUTER ASSISTED RADIOLOGY. PROCEEDINGS OF THE INTERNATIONAL SYMPOSIUM, XX, XX, vol. 10, June 1996 (1996-06), pages 187-192, XP008064963 * the whole document * ----- | | |

TECHNICAL FIELDS SEARCHED (IPC)

The present search report has been drawn up for all claims

| Place of search | Date of completion of the search | Examiner |
|---|---|---|
| The Hague | 15 June 2006 | Almeida Garcia, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................
& : member of the same patent family, corresponding document

**EP 1 780 672 A1**

## ANNEX TO THE EUROPEAN SEARCH REPORT
## ON EUROPEAN PATENT APPLICATION NO.

EP 05 42 5750

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2006

| Patent document cited in search report | | Publication date | Patent family member(s) | | Publication date |
|---|---|---|---|---|---|
| US 5839440 | A | 24-11-1998 | JP | 8249457 A | 27-09-1996 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6553152 B

### Non-patent literature cited in the description

- **FISCHER, B. ; MODERSITZKI, J.** Curvature Based Registration with Applications to MRMammography. *ICCS 2002,* 2002, 202-206
- **SHI J ; TOMASI C.** Good Features to Track. *IEEE Conference on Computer Vision and Pattern Recognition (CVPR'94,* 1994, 593-600
- **TOMMASINI T ; FUSIELLO A ; TRUCCO E ; ROBERTO V.** Making Good Features Track Better. *Proc. IEEE Int. Conf. on Computer Vision and Pattern Recognition (CVPR '98,* 1998, 178-183
- **RUITER, N. V. ; MULLER, T. O. ; STOTZKA, R. ; KAISER, W. A.** Elastic registration of x-ray mammograms and three-dimensional magnetic resonance imaging data. *J Digit Imaging,* 2001, vol. 14, 52-55
- **HUWER, S. ; RAHMEL, J. ; WANGENHEIM, A. V.** Data-Driven Registration for Lacal Deformations. *Pattern Recognition Letters,* 1996, vol. 17, 951-957
- **LUCAS BD ; KANADE T.** An Iterative Image Registration Technique with an Application to Stereo Vision. *IJCAI81,* 1981, 674-679
- **W. K. PRATT.** Digital Image Processing. John Wiley & Sons, Inc, 1991
- **E. LOUPIAS ; N. SEBE.** Salient Points: Applications to Image Retrieval Using Color and Texture Features. *Visual'00,* 223-232
- **Q. TIAN ; N. SEBE ; M.S. LEW ; E. LOUPIAS ; T.S. HUANG.** Image Retrieval using Wavelet-based Salient Points. *Journal of Electronic Imaging,* October 2001, vol. 10 (4), 835-849
- **PAUL S. HECKBERT.** Defining: Graphics Gems. Academic Press, 1994, vol. IV, 193-98